Europäisches Patentamt

European Patent Office

Office européen des brevets

(11) Publication number: **0 467 969 B1**

# EUROPEAN PATENT SPECIFICATION

(45) Date of publication of patent specification: **15.06.94**    (51) Int. Cl.⁵: **C02F 3/06**, C02F 3/10

(21) Application number: **90906637.5**

(22) Date of filing: **03.04.90**

(86) International application number:
**PCT/US90/01781**

(87) International publication number:
**WO 90/11970 (18.10.90 90/24)**

(54) **PROCESS FOR REMOVAL OF ORGANIC POLLUTANTS FROM WASTE WATER.**

(30) Priority: **10.04.89 US 335610**
**01.11.89 US 430745**

(43) Date of publication of application:
**29.01.92 Bulletin 92/05**

(45) Publication of the grant of the patent:
**15.06.94 Bulletin 94/24**

(84) Designated Contracting States:
**AT BE CH DE DK ES FR GB IT LI LU NL SE**

(56) References cited:
**EP-A- 0 209 790**
**EP-A- 0 244 695**
**EP-A- 0 306 054**
**US-A- 3 232 434**

**Journal WPCF, volume 50, no.11, November
1978, D.W:Holladay et al : Biodegration of
phenolic waste liquors in stirred-tank,
packed-bed, and fluidized-bed bioreactors",
pages 2573-2601**

(73) Proprietor: **ALLIEDSIGNAL INC.**
**101 Columbia Road,**
**P.O. Box 2245**
**Morristown, New Jersey 07962-2245(US)**

(72) Inventor: **LUPTON, Francis, S.**
**1325 Monroe Street**
**Evanston, IL 60202(US)**
Inventor: **SHERIDAN, William, G.**
**22 W. 530 Birchwood Drive**
**Glen Ellen , IL 60137-7306(US)**
Inventor: **SURGI, Marion, Rene**
**1808 Greenleaf Street**
**Evanston, IL 60202(US)**

(74) Representative: **Brock, Peter William et al**
**UROUHART-DYKES & LORD**
**91 Wimpole Street**
**London W1M 8AH (GB)**

42nd **PURDUE** University Industrial Waste Conference Proceedings, 1987, S. W. Givens et al:" Evaluation of carbon impregnated polyurethane foam media for biological removal of carbon and nitrogen from chemical industry watewater," pages 92-102 see page 93

**Description**

This invention relates to a process for the removal of organic pollutants from waste water. More particularly, this invention relates to a process for removal of such pollutants especially substituted and unsubstituted phenols by aerobic biodegration using a porous biomass support system in a fixed bed reactor.

One of the hallmarks of contemporary civilization is that each increment of technological progress almost invariably is accompanied by a similar increment of environmental regress. As the pace of technological advances quickens, so does the march of environmental deterioration. The realization of environmental damage has occurred only relatively recently, so that present society sometimes finds itself burdened with the accumulated sins of the not-too-distant past. But another hallmark of current society is its acceptance of the undesirability of environmental degradation coupled with a determination to minimize and even reverse it wherever possible. Although the return of ground waters to their pristine condition of an earlier era is not a realistic goal, there is a genuine determination to make our waters as pure as possible. Environmental agencies have set limits for many common industrial pollutants, and as methods of pollution reduction have become more successful in reducing or removing pollutants from waste water, environmental regulations have become more stringent, resulting in an ever tightening spiral whose goal is to reduce pollutants in waste water to that minimum which is technologically feasible.

Among the methods employed to reduce or remove pollutants, bioremediation constitutes an effective and highly desirable approach. Quite broadly in bioremediation pollutants serve as a food source, generally as a source of carbon and/or nitrogen, for microorganisms. bacterial metabolism converts the pollutants to metabolites generally with a simple chemical structure, sometimes degrading the pollutants completely to carbon dioxide and water in an aerobic process, or to methane in an anaerobic process. But in any event, the metabolites usually have no adverse environmental effects.

Various bioremediation processes are known. For example, U.S. Patent No. 4,634,672 describes biologically active compositions for purifying waste water and air which comprises a polyurethane hydrogel containing (i) surface active coal having a specific surface according to BET of above 50 $m^2/g$, a polymer having cationic groups and cells having enzymatic activity and being capable of growth. U.S. Patent No. 4,681,852 describes a process for biological purification of waste water and/or air by contacting the water or air with the biologically active composition of U.S. Patent No. 4,634,672. The experimental examples of these patents indicate that the process is not effective for reducing contaminant concentrations in the effluent strain to less than 44 parts per million (ppm). This is not acceptable since the Environmental Protection Agency (EPA) in some instances has mandated that concentration for some contaminants (such as phenol) in the effluent stream must be as low as 20 parts-per-billion (ppb). (See Environmental Protection Agency 40 CFR Parts 414 and 416. Organic Chemicals and Plastics and Synthetic Fibers Category Effluent Limitations Guidelines, Pretreatment Standards, and New Source Performance Standards. Federal Register, Vol. 52, No. 214, Thursday, Nov. 5, 1989. Fules & Regulations, 42522.

Both U.S. Patent Nos. 3,904,518 and 4,069,148 describe the addition of activated carbon or Fuller's earth to a suspension of biologically active solids (activated sludge) in waste water as an aid in phenol removal. The absorbents presumably act by preventing pollutants toxic to the bacteria from interfering with bacterial metabolic activity. The patentees' approach has matured into the so-called PACT process which has gained commercial acceptance despite its requisites of a long residence time, compious sludge formation with attendant sludge disposal problems, and the need to regenerate and replace spent carbon.

Rehm and coworkers have further refined the use of activated carbon in the aerobic oxidation of phenolic materials by using microorganisms immobilized on granular carbon as a porous biomass support system. Utilizing the propensity of microorganisms to grow on and remain attached to a surface, Rehm used a granular activated carbon support of high surface area (1300 $m^2/g$) to which cells attached within its macropores and on its surface, as a porous biomass support system in a loop reactor for phenol removal. H.M. Ehrhardt and H.J. Rehm, Appl. Microbiol. Biotechnol., 21, 32-6 (1985). The resulting "immobilized" cells exhibited phenol tolerance up to a level in the feed of about 15 g/L, whereas free cells showed a tolerance not more than 1.5 g/L. It was postulated that the activated carbon operated like a "buffer and depot" in protecting the immobilized microorganisms by absorbing toxic phenol concentrations and setting low quantities of the absorbed phenol free for gradual biodegradation. This work was somewhat refined using a mixed culture immobilized on activated carbon [A. Morsen and H.J. Rehm, Appl. Microbiol. Biotechnol., 26, 283-8 (1987)] where the investigators noted that a considerable amount of microorganisms had "grown out" into the aqueous medium, i.e., there was substantial sludge formation in their system.

Suidan and coworkers have done considerable research on the analogous anaerobic degradation of phenol using a a packed bed of microorganisms attached to granular carbon [Y.T. Wang, M.T. Suidan and B.E. Rittman, Journal Water Pollut. Control Fed., 58 227-33 (1986)]. For example, using granular activated carbon of 0 841 x 1 19 mm (16 x 20 mesh) as a support medium for microorganisms in an expanded bed configuration, and with feed containing from 358-1432 mg phenol/L, effluent phenol levels of about 0.06 mg/L (60 ppb) were obtained at a hydraulic residence time (HRT) of about 24 hours. Somewhat later, a berl-saddle-packed bed and expanded bed granular activated carbon anaerobic reactor in series were used to show a high conversion of COD to methane, virtually all of which occurred in the expanded bed reactor; P.Fox, M.T. Suidan, and J.T. Pfeffer, ibid., 60, 86-92 (1988. The refractory nature of ortho- and meta-cresols toward degradation also was noted.

Givens and Sack, 42nd Purdue University Industrial Waste Conference Proceedings, pp. 93-102 (1987), performed an extensive evaluation of a carbon impregnated polyurethane foam as a microbial support system for the aerobic removal of pollutants, including phenol. Porous polyurethane foam internally impregnated with activated carbon and having microorganisms attached externally was used in an activated sludge reactor, analogous to the Captor and Linpor processes which differ only in the absence of foam-entrapped carbon. The process was attended by substantial sludge formation and without any beneficial effect of carbon.

The Captor process itself utilizes porous polyurethane foam pads to provide a large external surface for microbial growth in an aeration tank for biological waste water treatment. The work described above is the Captor process modified by the presence of carbon entrapped within the foam. A two-year pilot plant evaluation of the Captor process itself showed substantial sludge formation with significantly lower microbial density than had been claimed. J.A. Heidman, R.C. Brenner and H.J. Shah, J. of Environmental Engineering, 114, 1077-96 (1988). A point to be noted, as will be revisited below, is that the Captor process is essentially an aerated sludge reactor where the pads are retained in an aeration tank by screens in the effluent line. Excess sludge needs to be continually removed by removing a portion of the pade via a conveyor and passing the pads through pressure rollers to squeeze out the solids.

H. Bettmann and H.J. Rehm, Appl. Microbial. Biotechnol., 22, 389-393 (1985) have employed a fluidized bed bioreactor for the successful continuous aerobic degradation of phenol at a hydraulic residence time of about 15 hours using Pseudomonas putida entrapped in a polyacrylamide-hydrazide gel. The use of microorganisms entrapped within polyurethane foams in aerobic oxidation of phenol in shake flasks also has been reported; A.M. Anselmo et al., Biotechnology B.L., 7, 889-894 (1985).

Known bioremediation processes suffer from a number of inherent advantages. For example, a major result of increased use of such processes is an ever increasing quantity of sludge, which presents a serious disposal problem because of increasingly restrictive policies on dumping or spreading untreated sludge on land and at sea. G. Michael Alsop and Richard A. Conroy, "Improved Thermal Sludge Conditioning by Treatment With Acids and Bases", Journal WPCF, Vol. 54, No. 2 (1982), T. Calcutt and R. Frost, "Sludge Processing - Chances for Tomorrow", Journal of the Institute of Water Pollution Control, Vol. 86, No. 2 (1987) and "The Municipal Waste Landfill Crisis and A Response of New Technology", Prepared by United States Building Corporation, P.O. Box 49704, Los Angles, CA 90049 (November 22, 1988). The cost of sludge disposal today may be several fold greater than the sum of other operating costs of waste water treatment.

Use of anaerobic sewage treatment systems has been offered as a solution to the sludge problem. William J. Jewell "Anaerobic Sewage Treatment", Environ. Sci. Technol., Vol. 21, No. 1 (1987). The largest difference between aerobic and anaerobic systems is in cellular yield. More than half of the substrate removal by aerobic systems can yield new microbial mass or sludge, the yield under anaerobic conditions is usually less that 15% of the organic substances removed. However, anaerobic systems are limited in the number of substrate that they can degrade or metabolize such as non-substituted aromatics (See N.S. Battersby & V. Wilson. "Survey of the anaerobic biodegradation Potential of Organic Chemicals in Digesting Sludge." Applied & Environmental Microbiology, 55(2):p. 433-439, Feb. 1989. This is a significant disadvantage in that most industrial processes such as coke production and coal tar processing normally produce non-substituted aromatics as by-products (See J.M. Thomas, M.D. Lee, M.J. Scott and C.H. Ward, "Microbial Ecology of the Subsurface at an Abandoned Creosote Waste Site." Journal of Industrial Microbiology, Vol. 4, p. 109-120, 1989.

Another disadvantage inherent in some known bioremediation processes is that these processes do not reduce the levels of organic pollutants to reasonable levels [preferable less than about 0.1 parts per million (ppm)] at reasonable residence times (preferably less than about 24 hours). For example, in the process of U.S. Patent Nos. 4,681,851 and 4,634,672 (See the specific examples), the concentration of phenol contaminants was not reduced below about 44 ppm.

SUMMARY OF THE INVENTION

This invention relates to a process for purification of waste water by aerobic biodegradation. More particularly, the process of this invention comprises:

Passing an aqueous feed stream containing one or more organic materials through a fixed bed reactor having plug flow characteristics or substantially plug flow characteristics in the presence of a gas comprising an effective amount of oxygen, said reactor containing a biologically active biomass comprising a plurality of biologically active particles comprising a particulate substrate having an effective amount of an effective absorbent for at least one of said materials in particulate form in or on and in said substrate and having on, in or on and in said substrate and/or said absorbent an effective amount of one or more aerobic microorganisms capable of metabolizing at least one of said organic materials to provide an effluent stream in which the concentration of at least one of said materials is less than the concentration of said material in said feed stream.

One embodiment of this invention provides a method for the aerobic biodegradation or phenolic materials in aqueous streams to levels under 0.1 parts per million in period no more than 30 hours comprising flowing at a rate corresponding to an hydraulic residence time no more than 30 hours an aqueous steam containing phenolic materials in the presence of oxygen through a fixed mass of a porous biomass support system of particulate open-celled polyurethane foam having entrapped within its pores powdered activated carbon and aerobic phenolic-degrading microorganisms.

Another embodiment provides a method for the aerobic biodegradation of organic pollutants in aqueous streams comprising flowing at a rate corresponding to an hydraulic residence time no more than 30 hours a pollutant-laden aqueous steam in the presence of oxygen through a fixed mass of a porous biomass support system of particulate open-celled foam having entrapped within its pores powdered activated carbon and aerobic microorganisms capable of degrading said organic pollutants and with a total sludge production no more than 100 kg dry weight per metric ton chemical oxygen demand consumed.

The invention also provides a porous biomass support system comprising an open-celled foam having voids of at least 2 mm in size and having entrapped within its voids from 5 to 85 weight percent, based on dry support as prepared, powdered activated carbon with a surface area of at least 500 $m^2/g$ and a pore volume of at least 0.5 $cm^3/g$, and 2) viable, aerobic microorganisms capable of degrading organic pollutants.

A further embodiment provides a process for purification of aqueous feed stream containing organic pollutants which comprises passing an aqueous feed stream containing one or more organic pollutants through a fixed bed reactor having plug flow characteristics or substantially plug flow characteristics in the presence of a gaseous composition comprising an affective amount of oxygen, said reactor containing a plurality of biologically active particles comprising an open cell substrate having one or more particulate absorbents for at least one of said pollutants in or on and in said substrate and a biologically active effective amount of one or more aerobic microorganism capable of metabolizing at least one of said organic pollutants on, in or on or in said substrate, said absorbents or said substrate and said absorbents to provide an effluent stream in which the concentration of at least one of said pollutants is less than the concentration of said pollutant in said feed stream.

An additional embodiment provides a method for the aerobic biodegradation of phenolic materials in aqueous streams to levels under about 0.1 parts per million in a period of no more than 30 hours comprising flowing at a rate corresponding to a hydraulic residence time no more than about 30 hours an aqueous stream containing phenolic materials in the presence of oxygen through a fixed biomass support system of particulate open-celled foam having entrapped within its pores powdered activated carbon and aerobic microorganisms capable of degrading said phenolic materials and with a total sludge production no more than about 100 kg dry weight per metric ton chemical oxygen demand.

Several advantages flow from the process of this invention. One unique advantage of this invention is that the process can be used to reduce relatively high levels of organic pollutants in the aqueous feed stream to relatively low levels with significantly less sludge formation than that from currently available systems, affording important advantages in sludge disposal costs. A comparison of representative levels of sludge production in several biological treatment systems is summarized in the following table, where sludge production is measured per unit reduction of COD (chemical oxygen demand).

| SLUDGE PRODUCTION IN BIOLOGICAL TREATMENT SYSTEMS | |
| --- | --- |
| System | Sludge Production (kg dry wt sludge/metric ton COD consumed) |
| Aerobic activated sludge | 400 - 600 (a) |
| Anaerobic digester | 20 - 150 (a) |
| Sybron biotower | 200 - 300 (b) |
| This invention | 30 - 100 (b) |

(a) R.E. Speece, "Anaerobic Biotechnology for Industrial Wastewater Treatment", Environmental Science and Technology, Vol. 17, pp. 416A - 427A, 1983.
(b) Experimental resulta; cf. Example III

In the most preferred embodiments of our invention phenol levels can be reduced to under about 0.1 ppm, and most preferably to under about 20 parts-per-billion (ppb), with sludge formation of no more than about 100 kg dry weight sludge, often no more than about 30 kg dry weight sludge, per metric ton total chemical oxygen demand consumed.

Reduced sludge formation attending our process is neither an incidental nor a minor benefit. A major result of increased wastewater treatment is an ever increasing quantity of sludge, with presents a serious disposal problem because of increasingly restrictive policies on dumping or spreading untreated sludge on land and at sea. The cost of sludge disposal today may be several-fold greater than the sum of other operating costs of wastewater treatment. Accordingly, the reduction in sludge levels characteristic of our invention has immediate, substantial economic benefit and alleviates the pressures of sludge dumping.

Another unique advantage of this invention is that significant reductions in levels of organic contaminants contained in the effluent stream are obtained with reasonable hydraulic residence times as compared to prior art processes as for example, the process described in U.S. Patent Nos. 4,634,672 and 4,681,851. For example, experimentation has demonstrated that in certain preferred embodiments of the invention, the level of effluent phenol in phenol contain aqueous waste streams can be reduced to concentrations as low as 20 parts per billion at hydraulic residence times as short at 16 hours. This is also not a trivial benefit especially in view of the low levels of various organic pollutants such as phenol in aqueous waste streams from industrial processes set by the Environmental Protection Agency and the econimic requirement that these reduced levels be obtained over reasonable time periods. Yet another benefit which flows from this invention is that the aqueous stream being treated by the process contain relatively high levels of organic contaminants. For example, in certain preferred embodiments of this invention, levels of organic pollutants in the feed stream can be as high as about 5000 parts-per million (ppm) reduced to levels as low as 1 ppm, or 0.1 ppm or for that matter 20 parts-per-billion (ppb). This advantage is of immediate and substantial economic benefit in that it obviates the need for time consuming and expensive pretreatment processes for reducing the amount of contaminant in the aqueous stream directly exiting the manufacturing process before introducing the stream into a bioremediation process.

As measured by its performance characteristic relative to prior art processes, the process of this invention is a marked improvement over the prior art and relative to the prior art represents a difference in kind rather than a difference in degree.

BRIEF DESCRIPTION OF THE DRAWINGS

The invention will be more fully understood and further advantages will become apparent when reference is made to the following detailed description of the invention and the accompanying drawings in which:

Figure 1 is a cross-sectional side view of a vertical reactor for use in a preferred embodiments of the invention;

Figure 2 is a cross-sectional side view of a horizontal reactor for use in the process of this invention.

Figure 3 is a perspective view of a preferred biologically active particle for use in the process of this invention.

Figure 4 is a cross-sectional top view of a reactor for use in the process of this invention having a cascading design.

Figure 5 is a side cross-sectional view of the reactor of figure 4.

Figure 6 is a top view of the reactor of Figure 3 depicting the oxygenation system of the reactor of figure 4.

Figure 7 is a cross-sectional top view of a reactor for use in a preferred embodiment of this invention having baffles.

Figure 8 is a side cross-sectional view of the reactor of Figure 7.

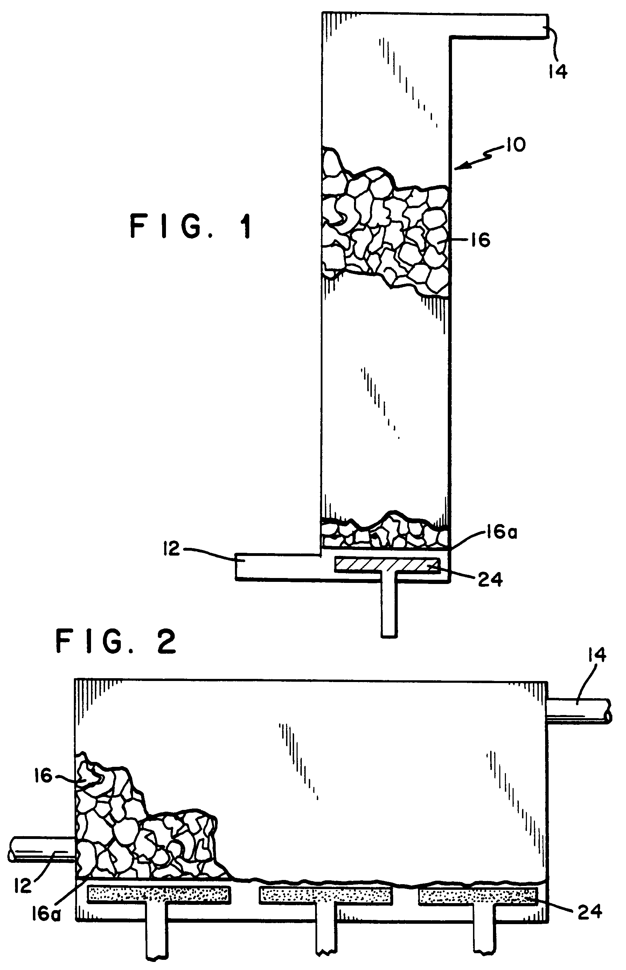

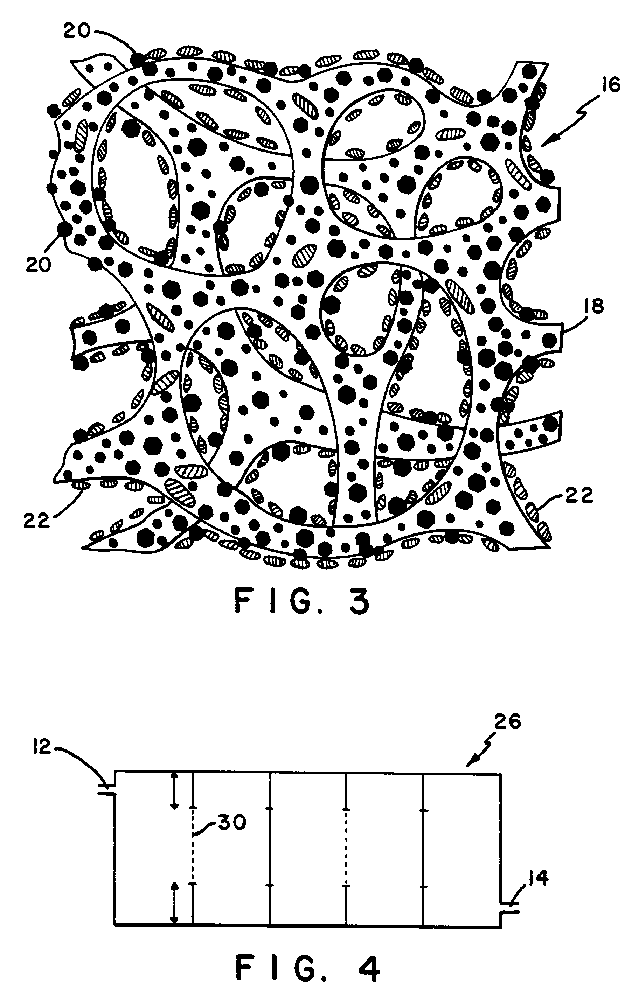

The present invention will be better understood by those of skill in the art by reference to the figures. Referring to figures 1 and 2, the numeral 10 indicates a reactor for use in the process of this invention. In the process, an aqueous waste stream containing one or more organic materials is introduced into reactor 10 via inlet 12, passes through reactor 10 and exits the reactor via exit 14 in the presence of a gas comprising an effective amount of oxygen at a rate sufficient to reduce the concentration of at least one of the materials in the effluent stream to the desired levels. Reactor 10 contains a plurality of biologically active particles in a identified in figures 1 and 2 by the numeral 16. As depicted in Figure 3, biologically active particles 16 comprise a polymeric substrate 18, having one or more types of a particulate absorbents 20 for at least one of the materials contained in said aqueous stream in substrate 18, or on the surface of substrate 18 and in substrate 18. Biologically active particles 16 also include one or more types of aerobic microorganism 22 on, in or on and in substrate 18 and/or absorbent 20 which are capable of metabolizing at least one of the materials contained in the waste stream.

The process is carried out in the presence of a gas comprising an effective amount of oxygen. As used herein, an "effective amount of oxygen" is an amount of oxygen which is sufficient to supply the metabolic requirement oxygen for the micro-organisms metabolizing of the target pollutant. It is important that reactor 10 be oxygenated to provide the necessary amount of oxygen for proper microbial metabolism and pollutant degradation. The amount of oxygen required in any situation will vary widely and will depend to a significant extent on the requirements of the particular microorganism(s) employed in the process and other factors known to those of skill in the art. In general, the amount of oxygen distributed in the process feed stream is at least about 2 mg of oxygen per liter of aqueous feed. In the preferred embodiments of the invention, the amount of oxygen is from about 5 mg per liter of feed to about 10 mg per liter of feed and in the most preferred embodiments of the invention, the amount of the oxygen is from about 6 mg/liter of feed to about 8 mg/liter of feed.In the preferred embodiments of this invention, the gas is distributed uniformly or substantially uniformly throughout all or a portion of the biologically active biomass. The manner in which the gas is introduced into reactor 10 may vary widely. The gas may be introduced into reactor 10 employing conventional methods. For example, in the vertical or up-flow reactor 10 of Figure 1, the gas is introduced into reactor 10 with the aqueous feed stream at the bottom of the reactor 10 through use of sparger 24 which introduces the gas in the form of small diameter gas bubbles. Supplemental gas can be introduced, if required, at various points along the vertical length of reactor 10 (not depicted in the drawing). In the embodiment of the invention in which reactor 10 is a horizontal reactor as for example the reactor of Figure 2, the gas can be introduced along the horizontal length of reactor 10 at various points to achieve a substantially uniform distribution of the gas in the feed stream in reactor 10. In this embodiment, the up-flow of the gas is orthogonal or substantially orthogonal to the direction of the flow of the aqueous feed stream. In the most preferred embodiments of the invention, reactor 10 is in a horizontal configuration in which the gas is distributed uniformly or substantially uniformly throughout all or substantially of reactor 10. In these most preferred embodiments,the gas is introduced into reactor 10 along the horizontal length of reactor 10 as depicted in figure 2. In this mode, a more uniform distribution of the gas in the feed stream is achieved.

In the most preferred embodiments of the invention, the length of reactor 10 is greater than the height of reactor 10 and the ratio of length of reactor 10 to the height of reactor 10 is selected to achieve the desired distribution of gas in reactor 10. In general, the height of reactor 10 is from 0.5 m to 8 m and the ratio of length to height is from 7:1 to 2:1. In the preferred embodiments of the invention, the height of reactor 10 is from 1 m to 6 m and the ratio of length to height is from 6:1 to 3:1; and in the particularly preferred embodiments of the invention, the height of reactor 10 is from 2 m to 5 m and the ratio of length to height is from 5:1 to 3:1. Amongst these particularly preferred embodiments of the invention, most preferred ar those embodiments in which the height of the reactor is from 2.5 m to 4.5 m and the ratio of length to height is from 4:1 to 5:1.

Process temperatures may vary widely and will depend on the particular microorganisms chosen for use. In general, the process is carried out at a temperature sufficiently high so as to not unduly interfere with the metabolism of the microorganism and sufficiently low as to not kill the microorganism. Process temperatures are usually from 5°C to 65°C. Process temperatures are preferably in the range of from 15°C to 65°C, more preferably in the range of from 20°C to 40°C and most preferably in the range of from 25°C to 35°C.

The aqueous organic pollutant-containing stream is treated in the process of this for a time sufficient to reduce concentration levels of at least one of the pollutants in the effluent stream the desired extent. In general, with aqueous feed streams in which the concentration levels of at least one pollutant is equal to or

7

less than 5000 ppm, a hydraulic residence time of less than 30 hours, preferably less than 24 hours, and more preferably less than 15 hours, suffices to attain a concentration for at least one pollutant in the effluent stream to equal to or less than 22 parts per million, more preferably equal to or less than 1 ppm, and most preferably equal to or less than 0.1 ppm. With an effluent concentration of equal to or less than 0.02 ppm is the concentration of choice. The particular hydraulic residence time depends upon the amount of phenolic material in the feedstock, operating temperature, the presence of other materials in the feedstock, the density of microorganisms in the fixed bed, and so forth.

The process of this invention results in relatively low sludge production. After 120 days of continuous or substantially continuous operation, the amount of suspended sludge in the effluent stream is preferably equal to or less than 600 mg/L as measured by the test procedure "209°C Total Suspended Solids Dried at 103-105°C" described in Standard Methods For The Examination of Water and Wastewater, 10th Edition published by American Public Health Association, 1015 Fifteenth Street NW, Washington, DC 20025 pp. 96 and 97. In the more preferred embodiments of the invention, the amount of suspended sludge in the effluent stream is equal to or less than 400 mg/L, and in the most preferred embodiemtns of the invention, the amount of suspended sludge is equal to or less than 200 mg/L. In those embodiments of choice, the amount of suspended sludge is equal to or less than 100 mg/L.

The aqueous waste streams which may be treated in the process of this invention and the organic pollutants contained in such streams may vary widely. The only requirement is that at least one of the pollutants can be degraded or metabolized by an aerobic microorganism. Illustrative of such pollutants are phenolic materials such as phenol, the cresols, resorcinols, catechol, halogenated phenols as for example, 2-chlorophenol, 3-chlorophenol, 4-chlorophenol, 2,4-dichlorophenol, pentachlorophenol, nitrophenols as 2-nitrophenol and 4-nitrophenol, and 2,4-dimethylphenol. Another important class of organic pollutants consists of aromatic hydrocarbons, such as benzene, toluene, the xylenes, ethylbenzene, and so forth. Polynuclear aromatic hydrocarbons are an important subclass as represented by naphthalene, anthracene, chrysene, acenaphthylene, acenaphthene, phenanthrene, fluorene, fluoranthene, naphthacene, and pyrene. In the preferred embodiments of this invention the pollutants are those which are common in waste streams from industrial manufacturing facilities. For example, phenol is a preferred pollutant for treatment in the process of this invention. Phenol is found in waste streams of phenol manufacturers, of phenol users as phenol resin producers, of coal tar processing facilities, of wood pulping plants and other facilities practicing delignification. This is not to say that the process can or must be practiced only on such streams. The process which is the invention herein may be practiced on any aqueous feed containing levels of organic pollutants which are to be reduced.

The initial concentration of pollutants contained in the aqueous waste stream used in the process of this invention may vary widely. One of the advantages of this invention relative to prior art bioremediation processes is that waste streams containing relatively high amounts of pollutants can be treated. The concentration of organic pollutants in process streams treatable in the process of this invention are "biologically treatable levels". As used herein, "biologically treatable levels" are pollutant concentrations which do not inhibit or excessively inhibit the metabolism of the pollutants by the microorganism. Effluent streams from industrial processes such as phenol manufacturing plants and coal tar processing plants may have pollutant levels in excess of 20,000 ppm which may interfere with the process. It is preferred to reduce these levels to biologically treatable levels through use of conventional procedures such as solvent extraction, steam distillation and the like. In general, the concentration of pollutants in the aqueous streams is equal to or less than 5000 ppm. Obviously, the lower concentration is not critical and does not represent a limitation on the process. In the preferred embodiments of this invention, the concentration of organic pollutants is equal to or less than 4000 ppm, and in the particularly preferred embodiments of the invention the concentration of pollutants is equal to or less than 3000 ppm. Amongst these particularly preferred embodiments of the invention, most preferred are those in which the concentration of pollutants is equal to or less than 2000 ppm with a pollutant concentration of equal to or less than 500 ppm being being the concentration level of choice.

The pH of the pollutant-containing feed may need to be adjusted for optimum biodegradation. In general, the pH is within the pH range allowing metabolism of the target pollutant(s). In the preferred embodiments of the invention, the pH of the feed is from 6 to 9, and in the most preferred embodiment of the invention, the pH of the feed is from 6.5 to 7.5.

Nutrients may need to be provided. Such materials may be added through use of known additives such as fish meal peptine, soybean flour, peanut oil, cotton seed oil, and usually salts capable of providing phosphate, sodium, potassium, ammonium, calcium, sulfate, chloride, bromide, nitrate, carbonate or like ions. Usually sufficient amounts often are present in the aqueous feed to satisfy minimum requirements of the microorganism.

8

The aqueous feed stream is introduced into reactor 10 employing conventional means and is passed through the reactor employing an "effective hydraulic retention time". As used herein, an "effective hydraulic retention time" is a time which is sufficient for the process to reduce the concentration of pollutants in the effluent stream to the desired levels. Hydraulic retention times may vary widely and in general depend on such factors as the concentration of pollutants in the aqueous feed stream, desired maximum concentration of pollutants in the aqueous effluent stream, the microorganisms contained in the biomass, the pollutant, and the like. An advantage of the process of this invention is that reductions in pollutant concentration can be obtained with relatively short hydraulic retention times. In the preferred embodiments of this invention, hydraulic retention times are equal to or less than 36 hrs, and in the particularly preferred embodiments of the invention such times are from 10 to 36 hrs. Amongst these particularly preferred embodiments of the invention, most preferred are those embodiments in which the hydraulic retention time is from 10 to 24 hrs.

The type of reactor 10 used in the process of this invention is critical in providing the advantages of this invention. To achieve the advantages of this invention, the reactor must be a fixed bed reactor or substantially a fixed bed reactor. As used herein a "fixed bed reactor" is a reactor in which the plurality of biologically active particles are stationary or substantially stationary as the feed flows through the reactor.

Another critical requirement is that the length of the path traversed by the aqueous stream as it passes through the reactor and the width of the stream are such that the reactor has "plug flow characteristics" or substantially "plug flow characteristics". As used herein, the "plug flow characteristics" are achieved when all or substantially all of the mixing in the reactor occurs in the plane perpendicular to or substantially perpendicular to the plane of feed flow and there is no or substantially no mixing in the plane of feed flow. See Ed Shroeder, "Waste Water Treatement", McGraw Hill, (1980).

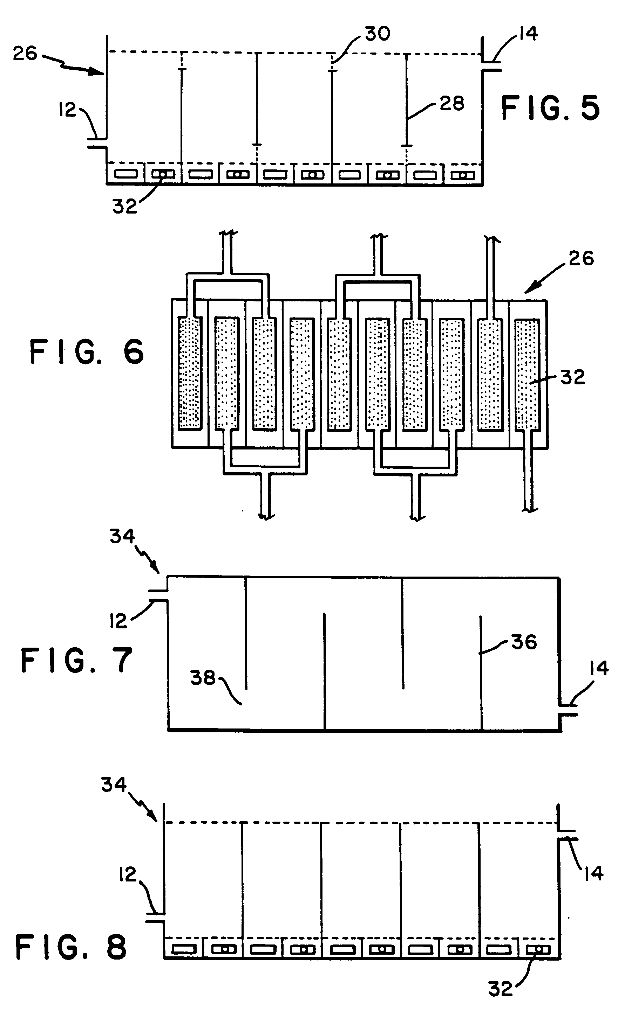

In general, plug flow can be achieved in a number of ways, all of which can be utilized in the practice of this invention. For example, in reactor 10 of figures 1 and 3, plug flow is achieved in a vertical or horizontal reactor with a relatively high reactor length to reactor width ratio, such as a length to width ratio of at least about 2 to 1, in which the length of reactor 10 is in the direction of feed flow, and the width of the reactor is perpendicular to the direction of feed flow. In reactor 10 of figures 1 and 3, the length of the reactor is the length of the path traversed by the feed stream as it passes through reactor 10 and the width of reactor 10 is the width of the stream. However, the actual length and the actual width of reactor 10 need not be equal to the length and width of the feed stream and the desired length to width ratio can be achieved by other means. Examples of these alternative embodiments are set forth in Figures 4 to 8. In Figures 4, 5 nd 6 is depicted a reactor 26 having a segmented design to achieve plug flow characteristics, corresponding parts being referred to by the like numerals as in the reactor of Figures 1 and 2. Reactor 26 is of a cascade design and includes inlet 12 and outlet 14. The length of the path traversed by the feed stream is lengthened through use of a plurality of cascades 28 which extend perpendicular to the length of reactor 26. As the feed passes through reactor 26, it traverses reactor 26 both horizontally and vertically along the length of a first cascade 28, through opening 30 and along the length of the next adjacent cascade 28 until the aqueous stream exits reactor 26 through opening 14. This design eliminates or substantially eliminates back mixing between the sections defined by the walls of adjacent cascades 28. The minimum number of sections required to achieve the desirable plug-flow conditions and performance efficiency is about four. However, more sections can be incorporated into reactor 26 which would result in greater plug-flow characteristics. From a practical and economic point of view, usually not more than ten sections are used. To provide for uniform or substantially uniform distribution of the gaseous composition in reactor 26, reactor 26 includes a plurality of gaseous sparging units 32 along its horizontal length at the bottom of reactor 26.

Figures 7 and 8 show a reactor 34 which differs from reactor 26 of Figures 4 to 6 in that the length of the path traversed by the feed stream as it traverses reactor 34 is increased through the use of baffles 36, corresponding parts being defined by like numerals. The feed stream is introduced in reactor 34 at inlet 12. As the feed stream passes through the reactor 34, it traverses both horizontally along the length of each baffle 36, through opening 38 along the length of the next baffle 36 and through the next opening 38 and so on along the length of each subsequent baffle 36 and through each subsequent opening 38 until the feed stream exits reactor 34 through outlet 14. As in the case of reactor 26, a uniform distribution or substantially uniform distribution of gas is achieved by sparging units 32 along the horizontal length of reactor 34.

The ratio of length of the feed stream to width of the stream is at least 2:1. In the preferred embodiments of this invention, the ratio of length of the feed stream to width of the feed stream is from 2:1 to 15:1. In the particularly preferred embodiments of the invention, the ratio of length of the feed stream to width of the feed stream is from 3:1 to 10:1. In the most preferred embodiments of this invention, the ratio of length of the feed stream to width of the feed stream is from 5:1 to 8:1.

The biologically active composition for use in the process of this invention comprises a plurality of biologically active particles 16. As depicted in Figure 3, particles 16 comprise a substrate 18 having a particulate absorbent 20 for at least one of the organic pollutants contained in the aqueous feed stream on the surface of substrate 18 or, in substrate 18 or on the surface of substrate 18 and in substrate 18, and having aerobic micro-organisms 22 (which are capable of growth and of metabolizing at least one of the organic pollutants) on, in or on and in substrate 18 and/or absorbent 20. In the preferred embodiments of the invention, absorbent 20 is on the surface of substrate 18 and in substrate 20 and microorganism 22 are on, and on and in the substrate 18 and absorbent 20.

In the most preferred embodiments of the invention, absorbent 20 is bound to the surface of substrate 18 by way of an "effective binder". As used herein an "effective binder" is an organic material which is capable of binding absorbant 20 to the surface of substrate 18 such that there is no or substantial no loss of absorbant 20 into the effluent stream. The organic binder may be of any type known to the particulate impregnating art (carbon binding art; pigment binding art; powder binding art) which does not absorb and inactivate absorbent 20 and which does not contain substantial amounts of impurities which will absorb and inactivate absorbent 20. Examples of suitable binders are water soluble polymers which can be crosslinked or polymerized into water insoluble forms such as natural gums, cellulose and starch derivatives, salts of alginic acids, and polymers and copolymers of acrylic acid, acrylamide, vinyl alcohol and vinyl pyrrolidone. Examples of useful organic binders which are soluble in organic solvents include cellulose esters, cellulose ethers, polymers and copolymers of vinyl esters such as vinyl acetate, acrylic acid esters and methacrylic acid esters, vinyl monomers such as styrene, acrylonitrile-amide, and dienes such as butadiene, and chloroprene; natural rubber and chlorinated rubber. The amount of binder can vary quite widely and is not critical provided that the desired binding effect is achieved. For example, usually such an effect can be achieved where the amount of binder is between 10 and 150 parts per 100 parts by weight of absorbent 20.

Absorbent 20 for use in the practice of this invention may vary widely. The only requirement is that absorbent 20 is capable of absorbing the target pollutant on its surface and is capable of binding or being bound to the substrate surface by a number of mechanisms such as surface compatibility, charge and by a binding polymer such as polypropylene (See US-A-4,089,609, col. 4, lines 14 to 30).

Illustrative of useful materials for use in the fabrication of absorbent 20 are carbons such as coal, carbon black, activated carbon, and activated charcoal, silica gel, active clays, zeolites, hydrophobic and ion exchange resins, molecular sieves, and the like. In the preferred embodiments of the invention, absorbent 20 is formed from carbons such as coal, charcoal, carbon black and activated carbon, and in the particularly preferred embodiments of the invention, the particulate absorbent 20 is formed from activated carbon. However, it will be clear to a person skilled in the art that any other particulate material can be used to form absorbent 20 may be used. The activated carbon which is preferably used may be produced by heat treatment of vegetable matter, animal matter, coal, lignite, petroleum residues or synthetic organic polymers either with or without the addition of chemicals, and is characterized by rapid and effective absorption of the targeted pollutants.

Absorbent 20 is in particulate form and is preferably porous to provide for greater surface area. The preferred particulate absorbent 20 has a surface area at least 500 m$^2$/g, preferably at least 700 m$^2$/g , and is preferably of a size such that at least 70% of the absorbent particles are smaller than 44 $\mu$m. That is, a minimum of about 70% of the absorbent particles pass through a 325 (44 $\mu$m) mesh sieve. In the preferred embodiments of the invention, powdered absorbent 20 has as high a pore volume as is practical, more preferably at least 0.5 cm$^3$, and most preferably at least 0.7 cm$^3$, with as great a porosity as possible contributed by pores preferably of greater than 1 $\mu$m in size. Maximization of the macropores maximizes the concentration of microorganisms in the immediate proximity of the surface of absorbent 20. Powdered absorbent 20 used in the practice of the preferred embodiments of this invention have a surface area of from 700 to 2000 m$^2$/g, a pore volume of from 0.7 to 1.0 cm$^3$/g, with of from 70 to 100% of the particles being under 44 $\mu$m in size. Although these correspond to characteristics of commercially available material, the invention per se imposes no such limitations and materials having as hhgh a surface area as possible are the materials of choice.

The amount of absorbent 20 employed may vary widely and depends on a number of factors including the specific activity of absorbent 20 for the target pollutant. In the preferred embodiments of the invention, the amount of absorbent 20 is an amount which is at least sufficient to maintain a steady state of an amount of the target pollutant which will allow the microorganism to metabolize the pollutant in the required time period to provide an effluent stream having less than 22 ppm of the target pollutant(s). In the more preferred embodiments of the invention, the amount of absorbent 20 is from 5 weight percent to 85 weight percent on a dry basis and based on the total weight of substrate 18 and absorbent 20. In the particularly preferred embodiments of the invention, the amount of absorbent 20 is from 10% by weight to 50 weight percent on a dry basis and based in the total weight of substrate 18 and absorbent 20, and in the most preferred embodiments of the invention, the amount of absorbent 20 is from 20% by weight to 40% by weight on the aforementioned basis.

Microorganisms 22, used in the practice of this invention, are aerobic microorganisms selected to degrade the target pollutants in ways well known to those of skill in the art. Useful microorganisms 22 may vary widely and may be naturally occurring microorganisms 22 or may be genetically engineered microorganisms 22. The only requirement is that microorganisms 22 are aerobic and are capable of metabolizing the target pollutant(s) to the required effluent levels over the required period of time. In the preferred embodiments of the invention, microorganism 22 are obtained from the pollutant-containing waste stream or from soil which has been in contact with the waste stream.

In the operation of the process, the cell content of microorganisms 22 is an amount which is sufficient to reduce the organic pollutant content to the desired concentration level within the desired hydraulic retention time. Of course, initially it is only necessary to inoculate substrate 18 and/or absorbent 20 with an amount of microorganisms 22 to result in an operative amount of microorganisms 22 within a reasonable period of time. In the preferred embodiments of the invention, cell content of microorganisms 22 is at least 0.3% by weight based on the total weight of microorganisms 22, substrate 18 and absorbent 20, and in the most preferred embodiments of the invention is from 0.3% by weight to 15% by weight on the aforementioned basis. Among these particularly preferred embodiments most preferred are those embodiments in which the cell content of microorganisms 22 is from 0.5 to 10% by weight based on the total weight of absorbent 20, microorganisms 22 and substrate 18, with a content of from 0.8 to 5% by weight on the aforementioned basis being the amount of choice.

Substrate 18 used in the practice of this invention is in particulate form. The size and shape of substrate 18 can vary widely. For example, substrate 18 may be in particulate form of regular shape such as cubular, rod shaped, rectangular, spherical, hexagonal or the like, or may be of irregular shape. The particle size may vary widely and is preferably from 2.5 to 76 mm (0.10 in. to 3 in). More preferred particle sizes are from 5.1 to 51 mm (0.2 in. to 2 in.), and most preferred particle sizes are from 12.7 to 25.4 mm (0.50 in. to 1 in.) with a particle size of from 12.7 to 19.1 mm (0.50 in. to 0.75 in.) being the particle size of choice.

Where all or a portion of microorganisms 22 and absorbent 20 are incorporated in substrate 18, substrate 18 is an open cell material having a relatively high macro porosity, as for example a foam. This allows the pollutant-containing aqueous feed to flow through the interior of the substrate. In the preferred embodiments of the invention, substrate voids are at least 2 millimeters, and preferably are on the order of from 5 to 6 millimeters in size. Substrate 18 also needs to be resistant to the shear forces and abrasion present in a fixed bed reactor, and should have good crush strength. In these preferred embodiments of the invention, substrate 18 is preferably semiflexible, with a density of under 32 kg/m$^3$ (2 pounds per cubic foot) for optimum economic feasibility. However, higher density substrates, of from 64 to 80 kg/m$^3$ (4 to 5 pounds per cubic foot) or even higher, are usable. It should be realized that substrate density is related to the economics of the invention and not to its performance; the invention may be practiced with a large range of substrate densities, even if certain ranges may present distinct economic advantages.

The material used to form substrate 18 is not critical and may vary widely. The only requirement is that the material is suitable for use as a substrate in a fixed bed reactor, and is suitable for use in microbial processes, and has a degree of affinity for the absorbent of choice.

Illustrative of useful materials for fabrication of substrate 18 are ceramics such as bentonite, kaolinite, kieselgehr, diatomaceous earth, aluminum, silica, zirconia, barium titanate, synthetic carbides, synthetic nitrides and synthetic borides and the like. Illustrative of still other materials which can be used in the fabrication of substrate 18 are glasses such as soda-lime-silica glasses, lead glasses, borosilicate glasses, laser glasses, silica glasses, lead glass and glass-ceramics.

Illustrative of still other useful substrate materials are synthetic and naturally occurring polymeric materials such as polyamides such as poly(hexamethylene adipamide) (nylon 66), poly(4-aminobutyric acid) (nylon 4), poly(6-aminohexanoic acid) (nylon 6), poly(hexamethylene sebacamide) (nylon 6,10) and the like; polyesters such as poly(ethylene terephthalate), poly(butylene terephthalate), poly(1,4-cyclohexane dimethylene terephthalate) and the like; polyolefins such as polyethylene, polypropylene, poly(4-methyl pentene), polystyrene and the like; polyvinyls such as polyvinyl alcohol, poly(vinyl methyl ether), poly(vinyl methyl ketone), poly(vinyl pyrrolidone) and the like; polyacrylics such as polyacrylic acid, polymethacrylic acid, poly(methyl acrylate), poly(methyl methacrylate), poly acrylonitrile, polyacrylamide, poly-(methacrylamide) and the like. Other useful polymeric materials for use in the fabrication of the polymeric substrate are polyurethanes such as those derived from reaction of diisocyanates such as toluene diisocyanates, diphenyl methane diisocyanates, hexamethylene 1,6-diisocyanate, dicyclohexylmethane diisocyanate, 1,5-naphalene diisocyanate, p-phenylene diisocyanate, m-phenylene diisocyanate, 2,4-toluene diisocyanate, 4,4' diphenylmethane diisocyanate, 3-3'-dimethyl-4,4' diphenylmethane diisocyanate, 3,3'-dimethyl-4,4' biphenyl diisocyanate, 4,4'-diphenylisopropylidene diisocyanate, 3,3'-dimethyl-4,4'-diphenyl diisocyanate, 3,3'-dimethyl-4,4'-diphenylmethane diisocyanate, 3,3'-dimethoxy-4,4'-biphenyl diisocyanate, dianisidine diisocyanate, tolidine diisocyanate, hexamethylene diisocyanate, 4,4'-diisocyananodiphenylmethane and the like and diols such as glycerin, trimethylopropane, 1,2,6-hexane triol, methyl glycoside, pentaerythritol, sorbital sucrose, ethylene glycol, diethylene glycol, hydroxy terminated polyesters formed by direct esterification of dicarboxylic acid with an excess of a difunctional alcohol such as poly-(tetramethylene adipate), poly(ethylene adipate), poly(1,4-butylene adipate), poly(1,5-pentylene adipate), poly(1,3 butylene adipate), poly(ethylene succinate), poly(2,3-butylene succinate), polyether diols such as those prepared by reaction of a compound having active hydrogens such as di alcohols, poly alcohols, di phenols, polyphenols, aliphatic diamines or polyamines and aromatic diamines or polyamines with alkylene oxides such as styrene oxide, butylene oxide, propylene oxide, epichlorohydrin or mixtures of these alkylene oxides.

In the preferred embodiments of this invention, substrate 18 is formed from polymeric materials which can be foamed with an appropriate foaming agent such as nitrogen, helium, carbon-dioxide, azodicarbonamide and the like, to form open celled foams having the void characteristics described above. In these preferred embodiments of the invention, substrate 18 can be prepared and foamed in the presence of the selected microorganism without adversely affecting same.

In the particularly preferred embodiments of the invention, substrate 18 s formed from cross-linked polyurethane-hydrogels. Such materials can be obtained from commercial sources or prepared in accordance with known techniques. For example, such materials may be obtained by reacting isocyanate prepolymers with water in which diamines or polyamines are optionally contained as chain lengthening agents or as cross-linking agents or by reaction of a suitable polyol and a suitable diisocyanate or poly isocyanate reagent. Suitable polyols include long chain aliphatic diols, and polyoxy alkylene ethers. The isocyanate prepolymers have isocyanate end-groups and are prepared by reacting poly oxyalkylene ethers with an excess of diisocyanate or polyisocyanates. Illustrative of useful polyoxyalkylene ethers are those which have a molecular weight of from 500 to 10,000, preferably from 2,000 to 8,000, which have at least two active hydrogens and which contain at least 30% by weight based on the total weight of the polyethers of oxyethylene groups. Other useful oxyalkylene groups include oxypropylene, oxybutylene and the like. Polyethers of this type are produced by reacting compounds which have reactive hydrogen atoms such as dialcohols, polyalcohols, diphenols, polyphenols, aliphatic diamines, aliphatic polyamines, aromatic diamines, or aromatic polyamines with a suitable alkylene oxide such as ethylene oxide, propylene oxide, butylene oxide, styrene oxide and the like. Suitable diisocyanates include toluene 2,4-diisocyanate, diphenylmethane 4,4'-diisocyanate, diphenylmethane 2,4'-diisocyanate, diphenylmethane 2,2'-diisocyanate, toluene 2,6-diisocyanate, hexamethylene 1,6- diisocyanate and useful diamines and polyamines include aliphatic, cycloaliphatic and aromatic di- and polyamines such as ethylene diamine, hexamethylene diamine, diethylene triamine, hydrazine, guanidine, carbonate, N,N'-diisopropylhexamethylene diamine, 1,3-bisaminomethylbenzene, N,N'-bis-(2-aminopropyl)-ethylene diamine, N,N'(2-aminoethyl) ethylene diamine, 4,4'-diaminodiphenyl methane, 4,4'-dimethylamino-3,3'-dimethyldiphenyl methane, 2,4'-diamino-diphenylmethane, 2,4-diaminotoluene, 2,6-diaminotoluene and the like.

The amount of substrate 18 included in the biologically active particles 16 may vary widely. In general, the amount of substrate 18 is from 50 to 95 weight percent based on that total weight of biologically article particle 16. In the preferred embodiments of the invention, the amount of substrate 18 is from 60 to 90 weight percent based on the total weight of particle 16, and in the particularly preferred embodiments is from 70 to 85 weight percent on the aforementioned basis.

Biologically active particles 16 may include various optional ingredients such as a material having cationic groups. Illustrative of such materials are standard ion exchange resins which have cationic groups or other polymers which have structures containing positively-charged nitrogen atoms such as polyaminocarboxylic acid esters having cationic groups, polyacrylamides having cationic groups, polyethylene imines having cationic groups, copolymers of acrylonitrile, styrene and dimethylaminoethyl methacrylate having cationic groups, and condensation products of diethylene triamine and maleic anhydride having cationic groups, copolymers of isobutylene and maleic anhydride, followed by imidization with specific diamines, having cationic groups. The content of polymers having cationic groups in the composition according to the invention may vary widely and is usually from 0.2 to 20% by weight based on the total weight of the biologically active particle, preferably from 0.5 to 15% by weight, and most preferably from 1 to 10% by weight, based on the total weight of the reaction mixture for the preparation of the composition. Illustrative of other optional components which can be used in the practice of this invention are density-increasing substances such as barite, metal powder, powdered rubber, clay powder, pumice powder, glass powder, powder obtained from the kernels and shells of olives and nuts, and rock-flour; density-reducing substrates such as small polystyrene globules, wood powder, powder from plastic waste, hollow microbeads, and polyethylene foam flakes; coloring agents such as coloring pigments, and dyes; short fibers of an organic or inorganic base such as glass fibers and gel-forming macromolecular substances such as types of cellulose, alginates, starch, and carrageenans.

Biologically active particles 16 for use in the process of this invention may be prepared through use of conventional methods known to those of skill in the art. Illustrative of such useful methods are those described in United States Patent Nos. 4,634,672, 4,045,609, 4,749,496, 4,046,938, 4,576,718 and 4,801,621.

In the most preferred embodiments of the invention, biologically active particles 16 are prepared by impregnating substrate 18 with a slurry of absorbent 20 (especially activated carbon) and a liquid such as water or an organic solvent such as ethyl acetate, with or without an organic binder. Absorbent 20 is impregnated into and on the surface of substrate 18 by conventional impregnating techniques such as immersion of substrate 18 in the suspension of absorbent 20. The choice of liquid is determined by the solubility of substrate 18 in the liquid and the ability of the liquid to inactivate the absorbent material. Liquids that dissolve substrate 18 are unsuitable as are liquids that bind to and inactivate absorbent 20. Suitable liquids include but are not restricted to alkanols, such as ethanol, methanol, methyl and ethyl alcohols, propanol, and isopropanol; ketones such as acetone and esters such as ethyl acetate. The most preferred liquid for use in this invention is ethyl acetate. Impregnation is followed by removal of excess liquid as for example by squeezing or pressing, and drying to cure absorbent 20 with or without a binder. Substrate 18 can be dried under vacuum or with heat provided that the level of heat is not so great as to chemically or physically degrade the substrate material. The amount of absorbent 20 present in, on or in and on substrate 18 can be varied by adjusting the concentration in the impregnating suspension or by repeating the impregnation two or more times.

The most preferred polymeric substrate material in the present invention is a flexible open-celled foams with a high permeability to water. The foam used in the practice of this invention must accommodate feed flow in the fixed bed configuration. To this end, it is important that the foam has a highly interconnected porosity where the foam voids desirably are at least 2 millimeters and can range up to 10 millimeters or more in size. The voids preferably are on the order of from 5 to 6 millimeters in size. The foam is desirably semiflexible with a density of under 32 kg/m$^3$ (2 pounds per cubic foot). However, higher densities of from 64 to 112 kg/m$^3$ (4 to 7 pounds per cubic foot) or even higher are usable. Foam density is related to the economics of the invention and not performance and the invention may be practiced with a large range of foam density. The chemical nature of the foam is a relatively unimportant aspect of the invention so long as the foam is open-celled with void characteristics as described above and is suitable for use in a fixed bed reactor over extended periods of time and can be impregnated with appropriate microorganisms without being lethal. Flexible and semi-flexible polyether based polyurethane foams having an open-cell structure are preferred for the practice of this invention. Although flexible and semi-flexible open-celled polyurethane foams are preferred substrates it is understood that the present invention includes rigid polyurethane and other foams having an open-celled structure which can also be impregnated with particulate absorbents.

Following impregnation of the porous polyurethane support with activated carbon, the biomass support substrate so produced is then cut into an appropriate particle size and loaded as a fixed bed into a reactor. A suspension of pollutant degrading microbes is then added to the reactor. Thebiodegradative microbes absorb and attach on, in or on and in the activated carbon impregnated porous polyurethane supports through natural processes well known in the art.

The following examples are merely illustrative and representative of our invention which is of considerably larger scope. These examples should not be considered limiting in any way.

EXAMPLE 1

A. Preparation of bacterial culture. To prepare bacterial inoculum adapted to the waste stream that is to be treated, enrightment cultures were set up by adding to samples of the waste stream 100 mg/L ammonium sulfate and 25 mg/L of sodium phosphate followed by adjustment of the pH to 7.0. One hundred cm$^3$ portions of the foregoing sample were dispensed into 250 cm$^3$ flasks and inoculated with soil or sludge, then incubated at 25°C on a rotary shaker (250 rpm) for 7 days. At this time, 1 cm$^3$ subcultures were dispensed into new wastewater samples and incubated for another 7 days. Cultures were then maintained under these conditions prior to foam manufacture.

B. Foam Preparation. The polyurethane used to manufacture the bio-foam was a toluene diisocyanate polyether prepolymer supplied by W.R. Grace under the trade name Hypol. Foaming occurs upon reaction with water, and the pore structure of the foam can be altered by the addition of surfactants as well as auxiliary blowing agents such as chlorofluorocarbons or exogenous carbon dioxide to afford interconnected pores of at least 2 millimeter size. The following procedure is typical.

19 litres (22.7 kg) [Five gallons (50 lbs)] of polyurethane prepolymer (HYPOL 2000) was added to a mixing vessel of approximately 378 litres (100 gallons) capacity. 11.4 kg (Twenty-five pounds) of activated carbon (Calgon PAC type WPX), 2 $cm^3$ of Tween 80 surfactant, and 20 grams of sodium bicarbonate were mixed with the HYPOL 2000 to make a homogenous prepolymer/carbon/additive mixture using a high torque mechanical mixer. A homogenous mixture is indicated when the material has a wet "sheen" appearance. Two $cm^3$ of Tween 80 and 10 $cm^3$ of glacial acetic acid were added to 19 litres (5 gals.) of bacterial culture (optical density at 600 nm approx. 0.2). The bacterial culture then was added to the polyurethane prepolymer/carbon mixture in the mixing vessel and mixed rapidly with the high torque mechanical mixer. At first, the mixture was very viscous but rapidly lost its viscosity and was easily mixed. As the degree of crosslinking increased, the material once again began to become viscous. At this stage, it is very important to stop mechanically mixing the solution and allow the foaming to proceed. The sodium bicarbonate and the glacial acetic acid neutralize each other and in the process generate exogenous carbon dioxide. This extra gas formation added with that generated from the HYPOL cross-linking reactions leads to large and interconnected pores in the biofoam. The presence of the Tween 80 amplifies this effect by decreasing interfacial surface tension and promoting foam formation. The foam was usually allowed to cure for 10 to 20 minutes before it was cut up into blocks or shredded in a fitzmill comminuting machine to produce biofoam blocks of the desired size. The total volume of biofoam produced from this quantity of prepolymer and bacterial culture and produced under the above conditions was between 303 and 378 litres (80 and 100 gallons).

EXAMPLE 2

Four glass reactors were used as fixed bed reactors with different packing material as described in Table 1. Fixed bed reactors using a bed of biofoam of this invention is referred to as immobilized cell bioreactor (ICB). Each bench scale fixed bed eactorconsisted of a glass column of approximately 580 $cm^3$ total capacity 64 cm high and 3.4 cm internal diameter. The reactor volume occupied by water and foam was approximately 480 $cm^3$. The biofoam in the reactors consisted of irregular 10 mm (3/8") cubic blocks with the bed held in the reactor by means of 2 mm (1/14") wire mesh screens 53 cm apart. Biofoam volume in the reactor was approximately 130 $cm^3$. Reactors were operated in a concurrent upflow mode, i.e., both air and water flowing from the bottom to the top of the reactor, unless otherwise indicated. Compressed air at 376 kPa (40 psig) was used to aerate the column through a sintered glass sparger located at the bottom of the column. A gas regulator was used to regulate the aeration rate through the sparger at a level between 4 and 12 L/hr. Wastewater was pumped from a 4 liter feed reservoir to the bottom of the reactor with a Masterflex peristaltic pump. Typical wastewater flows through the reactor ranged from 0.25 to 0.8 m./min. The effluent from the columns was collected in another 4 liter reservoir. Both the feed and effluent reservoirs were placed in ice baths. The ambient temperature of the columns was approximately 25°C.

TABLE 1

| Reactor | Packing/ Catalyst | Flowpath |
|---------|-------------------|----------|
| #1 | Polypropylene discs, cells allowed to colonize surface (natural biofilm developed). | Upflow |
| #2 | P-I cells[a] entrapped in polyurethane foam (5g of HYPOL 3000 with 100 mL of P-I culture | Upflow |
| #3 | P-I in foam with acitvated carbon (5g of HYPOL 3000, 25g of ATOCHEM 830 DC[b] and 100 mL of P-I culture). | Upflow |
| #4 | P-I in foam with activated carbon as for #3. | Downflow |

a. Yeast cells enriched as described in Example 1 from hydrocarbon contaminated soil sample from Des Plaines, IL.

b. Powdered activated carbon from Atochem Co.

In each case the feed consisted of an aqueous solution containing 0.1 g/L dibasic potassium phosphate, 0.5 g/L ammonium sulfate, 0.1 g/L magnesium sulfate, 0.05 g/L calcium chloride, 0.01 g/L yeast extract, and 500 mg/L phenol. The phenol present in the effluent from the columns was analyzed by solid phase extraction with cyclohexyl columns supplied by Analytichem Co. by the 4-aminoantipyrine assay [R.D. Yang and A.E. Humphrey, Biotech. and Bioeng., 17, 1211-35 (1975)]. Suspended solids in the reactor effluents were determined by measuring the optical density at 600 nm. The columns were operated at a liquid hourly space velocity between 0.03 and 0.12 $h^{-1}$ for a total period of 116 days at an aeration rate (air introduced at bottom of reactor) of 12 liters per hour and an average temperature of 25°C. Results are tabulated in the following tables.

The results in Tables 2-4 will be better appreciated if it is understood that both the particular microbial species present in the reactors and their population are varying through the course of experimentation. With time the microorganisms adapt to the waste stream via natural selection, and the adaptation itself may depend, inter alia, on flow rate (LHSV). The population mix and number means that a steady state may not have been achieved at all flow rates during the course of experimentation. In fact, since low flow rates were chronologically the earliest experiments it is unlikely that a steady state was achieved at an LHSV of 0.03 $h^{-1}$ during the period for sampling. The chief consequence is that comparisons among reactors at any one LHSV are significant, but comparisons, even within the same reactor, of results at different LHSV are ambiguous.

TABLE 2

| Effluent Phenol Concentrations in Immobilized Whole Cell Reactors | | | | |
|---|---|---|---|---|
| LHSV,[a] $h^{-1}$ | Effluent Phenol Concentration ($\mu$g/L) | | | |
| | Reactor #1 | Reactor #2 | Reactor #3 | Reactor #4 |
| 0.03 | 73 ± 31 | 72 ± 40 | 31 ± 21 | 31 ± 11 |
| 0.06 | 44 ± 9 | 45 ± 8 | 24 ± 12 | 29 ± 13 |
| 0.09 | 40 ± 16 | 33 ± 4 | 18 ± 6 | b |
| 0.12 | 23 ± 8 | 24 ± 3 | 12 ± 5 | b |

a. LHSV = liquid hourly space velocity. Hydraulic retention time (HRT) and LHSV are reciprocals, i.e., HRT = (1/LHSV)
b. Reactor #4 plugged

TABLE 3

| Effluent Suspended Solids in Immobilized Whole Cell Reactors | | | | |
|---|---|---|---|---|
| LHSV[a] $hr^{-1}$ | Suspended Solids as O.D. 600 nm | | | |
| | Reactor #1 | Reactor #2 | Reactor #3 | Reactor #4 |
| 0.03 | 0.190±0.060 | 0.030±0.015 | 0.046±0.020 | 0.021±0.010 |
| 0.06 | 0.102±0.064 | 0.062±0.012 | 0.029±0.020 | 0.022±0.020 |
| 0.09 | 0.064±0.041 | 0.052±0.041 | 0.040±0.012 | b |
| 0.12 | 0.106±0.091 | 0.048±0.018 | 0.073±0.034 | b |

a. LHSV = liquid hourly space velocity. Hydraulic retention time (HRT) and LHSV are reciprocals, i.e., HRT = (1/LHSV)
b. Reactor #4 plugged

Table 2 show that at all HRTs the combination of foam having entrapped carbon and microorganisms afforded significantly lower phenol effluent levels than the the fixed bed reactors (#1 and #2), especially in achieving phenol effluent levels of 20 ppb and under. The data in Table 3 show that sludge formation, as measured by suspended solids from our PBSS-packed reactors, was substantially less than that from prior art reactor #1, with reductions ranging from 32 to 76 percent. This comparison becomes even more favorable when it is realized that reactor #3 simultaneously produces lower sludge formation and lower phenol effluent levels than does reactor #1.

TABLE 4

| Effluent Phenol Levels From Immobilized Cell Reactors | | | | | |
|---|---|---|---|---|---|
| DAYS | LHSV, hr$^{-1}$ | Effluent Phenol Concentration ($\mu$g/L) | | | |
| | | Reactor #1 | Reactor #2 | Reactor #3 | Reactor #4 |
| 6 | 0.03 | 101 | 110 | 82 | - |
| 7 | " | 137 | 171 | 44 | 45 |
| 11 | " | 77 | 73 | 30 | 27 |
| 12 | " | 70 | 58 | 22 | 24 |
| 13 | " | 47 | 47 | 25 | 29 |
| 14 | " | 59 | 68 | 25 | 32 |
| 22 | " | 32 | 41 | 15 | 16 |
| 25 | " | 61 | 44 | 20 | 27 |
| 29 | 0.06 | 43 | 36 | 13 | 19 |
| 33 | " | 47 | 47 | 24 | 22 |
| 50 | " | 58 | 58 | 26 | 23 |
| 55 | " | 48 | 50 | 22 | 22 |
| 58 | " | 40 | 46 | 21 | 23 |
| 62 | " | 30 | 38 | 15 | 18 |
| 65 | " | 47 | 49 | 29 | 28 |
| 68 | " | 32 | 36 | 12 | ** |
| 75 | 0.09 | 35 | 30 | 13 | ** |
| 79 | " | 21 | 28 | 12 | ** |
| 83 | " | 64 | 34 | 17 | ** |
| 85 | " | 33 | 38 | 24 | ** |
| 88 | " | 45 | 34 | 23 | ** |
| 99 | 0.12 | 27 | 26 | 16 | ** |
| 103 | " | 27 | 24 | 17 | ** |
| 106 | " | 27 | 25 | 5 | ** |
| 116 | " | 12 | 19 | 11 | ** |

** - Reactor #4 plugged.

The foregoing data show that there is no significant difference between performance of the naturally immobilized cell reactor (i.e., where the cells are attached on the polypropylene surface) and cells immobilized in polyurethane foam as regards effluent phenol levels, nevertheless there is lower sludge formation, as measured by lower suspended solids in the effluent, from the foam immobilized reactor compared to the biofilm reactor. However, the presence of activated carbon appears to have a significant and dramatic effect upon the level of phenol present in the reactor effluent, permitting phenol levels at or below 20 ppb.

EXAMPLE 3

A scaled up version of reactors 3 and 4 of the foregoing example was used to process a slip stream of industrial wastewater at a coal tar processing plant. The reactor was 4.3 m (14 feet high) with an inside diameter of 31.5 cm (12.4 inches). Foam prepared as above but containing approximately 33 weight percent powdered activated carbon was cut into cubes approximately 25 mm (1 inch) per side and was used to pack the reactor to a foam height of 3.4 m (11 feet), giving a foam volume of 246 litres (65 gallons) and a void volume of 83.3 litres (22 gallons). Waste water entered at the bottom of the reactor along with air passed through a sparging tube. After an extensive shakedown period during which the effect of various independent variables upon system operating performance was evaluated, the unit was operated at what was determined to be its optimum point for phenol removal from the feedstock. THis corresponded to a feed flow rate of 380 cm$^3$ (0.1 gallon) per minute, or HRT of 15 hours, and an air flow of 32.6 l/min (1.15 SFCM).

16

The pilot plant was operated concurrently with a Leopold Upflow Biotower from Sybron Inc. which processed the industrial waste water from which the slip stream to the pilot plant was drawn. The Bio-Tower was operated under conditions determined to be its optimum for phenol removal, which included an HRT of about 15 hours. This concurrent operation permitted a comparison of operational characteristics between the two units, some of which are summarized in the following tables.

The standard analytical test method for phenols using 4-aminoantipyrine (4-AAP) does not discriminate among individual phenolic components and also has been found to be subject to interference by many non-phenolic materials, such as aromatic hydrocarbons. In contrast, gas chromatoprgaphi analysis using a mass selective detector is both more sensitive and discriminatory than the 4-AAP method, affording more reliable data.

TABLE 5

| GC/MSD Analysis of Phenolic in Wastewater Feed and in Bio-Tower and Pilot Plant Effluents[a] | | | | |
|---|---|---|---|---|
| Sample No. | Component | Concentration ($\mu$g/L) | | |
| | | Wastewater | ICB Pilot Plant | Sybron Bio-Tower |
| 1 | phenol | 393,000 | 14 | 11 |
| | o-cresol | 40,000 | 31 | 8 |
| | m,p-cresol | 62,000 | 7 | 28 |
| | 2,4-dimethyl phenol | 6,000 | 9 | 36 |
| | Phenolics by 4-AAP[b] | 800,000 | 1,100 | 1,500 |
| 2 | phenol | 541,000 | 28 | 25 |
| | o-cresol | 42,000 | 31 | 201 |
| | m,p-cresol | 70,000 | 10 | 996 |
| | 2,4-dimethyl phenol | 5,800 | 11 | 241 |
| | Phenolics by 4-AAP | 950,000 | 900 | 4,400 |
| 3 | phenol | 1,408,333 | 12 | 3,907 |
| | 2,4-dimethyl phenol | 17,545 | 96 | 37 |
| | TSS (mg/L) | 59 | 208 | 1,113 |
| 4 | phenol | 339,024 | 6 | 801 |
| | 2,4-dimethyl phenol | 2,665 | 9 | 208 |
| | TSS (mg/L) | 55 | 189 | 760 |

a. GC/MSD stands for gas chromatographic analysis with mass selective detector.
b. 4-Aminoantipyrine analysis.

Table 6 summarizes analytical results from a commercial environmental laboratory.

TABLE 6

Analytical Results from
Independent Laboratory[a]

| Pollutants | Feed[b] | Pilot Plant[b] Effluent |
|---|---|---|
| 2,4-dimethylphenyl | 880 | <100 |
| phenol | 240000 | <100 |
| acenaphthene | 620 | <100 |
| acenaphthlene | 122 | 420 |
| fluoranthene | 130 | <100 |
| naphthalene | 5000 | <100 |
| phenanthrene | 350 | <100 |
| | <400 | <100 |

TABLE 6 (cont'd)

| Pollutants | Bio-Tower[b] Effluent |
|---|---|
| 2,4-dimethylphenyl | 130 |
| phenol | <100 |
| acenaphthene | 340 |
| acenaphthlene | <100 |
| fluoranthene | <100 |
| naphthalene | 260 |
| phenanthrene | <100 |
| | <100 |

a. Kemron Environmental Services, (109 Starlite Park, Marietta, Ohio 45715)

b. All units are micrograms per liter ($\mu$g/L). Detection Limits are: feed = 400; effluent = 100.

The foregoing data show that the method which is our invention is at least as efficient as a current commercial process, and is in fact even more efficient in removal of some non-regulated phenolic materials such as the cresols and, especially, 2,4-dimethylphenol. In particular, it appears to more consistently reduce total phenolic content that does the commercial comparison process, and reduces them to a level under that achieved by the comparison process. In addition, the ICB produced less than 25% of the sludge produced by the comparison process.

The waste water also contained aromatic hydrocarbons as pollutants, and Table 7 shows that our method is as efficient as the commercial comparison process in the removal of these materials as well.

TABLE 7

Purge and Trap GC/FID Analysis of
Benzene and Toluene.[a]

| Run | Concentration (mass-ppb) | | | |
|---|---|---|---|---|
| | Influent Wastewater | | Pilot Plant Effluent | |
| | Benzene | Toluene | Benzene | Toluene |
| 1 | 3,800 | 2,400 | 25 | 10 |
| 2 | 6,200 | 4,100 | 35 | 14 |
| 3 | 4,800 | 1,600 | 12 | 6 |

TABLE 7 (cont'd)

| Run | Concentration (mass-ppb) | |
|---|---|---|
| | Bio-Tower Effluent | |
| | Benzene | Toluene |
| 1 | 35 | 10 |
| 2 | 26 | 8 |
| 3 | – | – |

a.   GC/FID stands for gas chromatograph with flame
ionizaation detector.

EXAMPLE 4

    A glass reactor as described in Example 2 used as a fixed bed the porous biomass system of Example 1 containing 33 weight percent powdered activated carbon. The microorganisms entrapped in the biofoam were enrichment cultures from the wastewater and soil at the site prepared as described in Example 1. The reactor (ICB) were operated at a hydraulic retention time of 24 hours using a sample of industrial waste water from a phenol production plant. For comparison, effluent of the same waste water treated with activated sludge for 120 hours is also shown. Table 8 shows that both benzene and phenol are degraded almost completely immediately upon operation of the unit. A second trial afforded similar results. Table 9 shows the effect of hydraulic retention time on phenol breakthrough, and shows similar phenol degradation at hydraulic retention times as low as about 8 hours. As previously noted, the phenolic assay b 4-aminoantipyrine is subject to interference by a myriad of substances, including aromatic hydrocarbons, which are likely to be found in the waste waters. Therefore the results of the analysis in this table are to be used solely to indicate a trend rather than for absolute purposes. In contrast, Table 10 affords an analytical result as obtained via GC/MSD analysis in which the effect of interfering substances has been removed and which gives much more reliable analysis than the 4-AAP method. Among other things, Table 10 shows the enormous reduction in sludge production by the method of this invention relative to that of a typical retention basin. Finally, Table 11 shows more complete analytical data for effluent, from which it can be concluded that our reactor affords more complete degradation of most organic pollutants in 24 hors than does activated sludge in a retention basin in 120 hours.

19

## TABLE 8

### Immobilized Whole Cell Reactor Treatment of an Industrial Waste Bt-633. Additional Phenol and Benzene Added.

| Time (hours)[d] | 23.8 | 30.3 | 47.3 |
| --- | --- | --- | --- |
| Influent Benzene Conc. (ppb) | 2644.0 | 3200.0 | 920.0 |
| Incremental Total Benzene Loaded ($\mu$g) | 621.3 | 294.4 | 220.8 |

20

TABLE 8 (cont'd)

| Time (hours)[d] | 23.8 | 30.3 | 47.3 |
|---|---|---|---|
| Incremental Total Effluent Benzene ($\mu$g)[b] | <0.5 | <0.2 | <0.5 |
| Total Trapped Benzene in air ($\mu$g) | 3.0 | 0.8 | 1.7 |
| % Benzene Degraded | >99.4 | >99.7 | >99.0 |
| Influent Phenolics Conc. (ppm)[a] | 141.6 | 144.8 | 135.3 |
| Effluent Phenol Conc. (ppm)[b] | bmdl[c] | bmdl[c] | bmdl[c] |
| % Phenol Degraded | >99.5 | >99.5 | >99.5 |

a.  Total phenolics by 4-AAP assay.

b.  Minimum detection limits: phenol 0.2 ppm by 4-AAP assay; benzene, 2 parts per billion by purge and trap gas chromatography with flame ionization detector.

c.  bmdl = below miimum detection limit.

d.  Time from startup.


TABLE 9

Immobilized Whole Cell Reactor Treatment of an Industrial Waste Vt-633

| Accumulative | | | |
|---|---|---|---|
| Time (hrs): | 26.25 | 52.25 | 77.25 |
| Lapsed Time (hrs): | 26.25 | 26.00 | 25.00 |
| NRT (hr/col): | 23.3 | 25.4 | 23.3 |
| Influent Total Phenolics Conc. (ppm): | 66.7 | 43.0 | 45.9 |
| Effluent Phenol Conc. (ppm): | 2.0 | 3.5 | 3.7 |
| % Phenol Degraded: | 97.0 | 91.9 | 91.9 |

TABLE 9 (cont'd)

| Accumulative | | | |
|---|---|---|---|
| Time (hrs): | 105.25 | 123.75 | 150.08 |
| Lapsed Time (hrs): | 28.00 | 18.50 | 26.33 |
| NRT (hr/col): | 11.0 | 11.0 | 10.6 |
| Influent Total Phenolics Conc. (ppm): | 45.7 | 45.2 | 45.5 |
| Effluent Phenol Conc. (ppm): | 3.6 | 4.0 | 6.3 |
| % Phenol Degraded: | 92.1 | 91.2 | 91.6 |

## TABLE 9 (cont'd)

```
Accumulative
     Time (hrs):              173.08      198.08      224.08
Lapsed Time (hrs):            23.00       25.00       26.00
NRT (hr/col):                 8.7         8.6         7.2
Influent Total Phenolics
     Conc. (ppm):             45.7        50.6        54.7
Effluent Phenol
     Conc. (ppm):             3.6         3.7         6.3
% Phenol Degraded:           92.1        92.7        88.5
```

TABLE 10

| Analysis of Untreated, ICB Treated and Activated Sludge Treated Wastewater | | | |
|---|---|---|---|
| Component | Concentration (ppb) | | |
| | Untreated | ICB | Activated Sludge |
| Acetone | 1,350,000 | 1,000,000 | 850,000 |
| Phenol | 35,000 | 10 | 10 |
| Benzene | 350 | 20 | 20 |
| ICB<br>- 24 hr retention time<br>- 0.58 mg. sludge/liter effluent<br>Activated Sludge<br>- 120 hr. retention time<br>- 1.75 mg sludge/liter effluent | | | |

TABLE 11

| Water Analyses Results, ppb | | |
|---|---|---|
| Compound | ICB Reactor | Active Sludge |
| Acetone | 100,000 | 850,000 |
| Benzene | 20 | 20 |
| Butanone | <10 | 200 |
| Pentanone | <10 | 300 |
| Chloroform | 300 | 200 |
| Epoxy ketone | 600 | 3,000 |
| Diacetone alcohol | 350 | 1,700 |
| $C_9$ ketone? | 2,000 | 4,000 |
| Methyl cyclohexenone | 700 | 3,500 |
| Dimethyl phenyl carbinol | 60,000 | 200,000 |
| Acetophenone | <10 | 10,000 |
| Acetyl cyclohexanone | 300 | 3,500 |
| Unknown M.W. 126 | 100 | 75 |
| Phenol | 10 | 10 |

COMPARATIVE EXAMPLE 1

A series of comparative tests were conducted to compare the effectiveness of various completely mixed, and fluidized bed reactor, and the fixed bed reactor of this invention. The properties selected for comparison were hydraulic residence times, concentration of organic pollutants in the effluent stream and level of sludge production. These are the properties which ultimately determinative of the utility of bioremediation process for removal of organic contaminants from aqueous streams. In these experiments, a model phenol wastewater feed (described in Example 2) was treated in three bench scale reactors. Two were 500 cm$^3$ New Brunswick glass fermenters that were continuously mixed with a mechanical stirrer. One of these fermentors was a completely mixed reactor ("CSTR") which was operated as a chemostate in which the wastewater was pumped through with a hydraulic retention time of 33 h. In this reactor growth of the bacteria is required to replace the bacteria washed from the reactor in the effluent. A second mixed reactor was a fluidized bed reactor which was filled with approximately 200 cm$^3$ of biofoam and operated similarly. The third reactor was a fixed bed reactor operated in accordance with this invention consisted of a 500 cm$^3$ ICB bench scale reactor, as described in Example 2, using as a fixed bed the same biofoam as used in the foregoing second mixed reactor. This reactor was operated with a hydraulic retention time of 12.5 hours. The results of these experiments are set forth in the following Table 12.

TABLE 12

| Sludge Formation in Various Reactors | | | | |
|---|---|---|---|---|
| Reactor | HRT (hrs) | Effluent Phenol$^c$ ($\mu$g/L) | Sludge$^c$ | |
| | | | OD 600 nm$^a$ | TSS (mg/L)$^b$ |
| Continuous Stirred Tank Reactor (CSTR) | 33 | 820 | 0.45 | 680 |
| CSTR + Biofoam | 33 | 62 | 0.36 | 606 |
| ICB | 13 | 19 | 0.07 | 96 |

a. Sludge as measured by turbidity; optional density at 600 nm.
b. Total suspended solids.
c. Measurements taken after 1 void volume for the CSTR reactors, and after 33 hours for the ICB. None represent steady state conditions.

The process of this invention employing the fixed bed reactor provided a significantly lower amount of sludge, a significantly higher efficiency for removal of phenol at a significantly lower hydrualic retention time than the completely mixed reactor and the fluidized bed reactor.

COMPARATIVE EXAMPLE 2

A series of experiments were carried out to evaluate the effect of ratio of the length (l) of the reactor to the height (h) of the reactor on the efficiency of the reactor for removal of organic pollutants from aqueous waste streams. Three reactors were employed in these experiments. Two reactors were of vertical design having a relatively low l/h ratio identified as UBT and V-ICB, and one reactor of horizontal design with are a relatively high l ratio of 10:1.

The horizontal ICB consists of an open horizontal tank with relative dimensions of; length, 10: Width, 4: Depth, 3. The tank contains four baffles that are spaced evenly along the length of the reactor and cross 75% of the width. These dimensions hold for any reactor size up to 67.3 m$^3$ (2376 ft$^3$) when the depth of the tank is 2.4 m (8 ft). The depth should never exceed 2.4 m (8 ft) so as to enable good air distribution throughout the foam bed and ideally should be less than 1.8 m (6 ft) deep. For reactors with greater than 67.3 m$^3$ (2376 cft) capacity, the length to width ratio will still be 10:4 but with the depth fixed at 2.4 m (8 ft) as a maximum. For example, a reactor of 113.3 m$^3$ (4000 cft) capacity would have dimensions of 11 x 4.3 x 2.4 m (36 ft x 14 ft x 8 ft) whereas a reactor of 283.2 m$^3$ (10,000 cft) capacity would have dimensions of 17.4 x 6.7 x 2.4 m (57 ft x 22 ft x 8 ft). The foam bed is held in place by means of a 13 mm (1/2 inch) wire screen. The foam bed likewise sits on top of a similar wire screen that overlies the aeration system. The aeration system consists of 10 sparger plates in separate compartment (Figure 1). The sparger plates have 400 $\mu$m (1/64") holes placed 38 mm (1.5") apart. The air pressure to the sparging plates should be such that the gas velocity through each hole is in the range of 12.2-36.6 m/s (40-120 ft/sec) with the optimum being 24.4 m/s (80 ft/sec).

The Sybron Upflow Biotower (UBT) is a fixed bed reactor system that consists of a vessel with dimensions of 3.7 x 3.0 x 3.0 m (12 ft x 10 ft x 10 ft) 34 m$^3$ (8,975 gallon capacity) and packed with plastic pall rings which act as a biomass support medium. The vertical IBC (V-ICB) consists of a vertical column of dimensions 4.3 x 0.3 m (14 ft x 1 ft diameter) 0.3 m$^3$ (82 gallon Capacity) whereas the horizontal ICB (H-ICB) consists of a rectangular tank with four evenly spaced baffles with dimensions of 1.5 x 0.6 x 0.4 m (5 ft x 2 ft x 1.4 ft 0.4 m$^3$ (100 gallon capacity). Both ICB configurations used polyurethane foam blocks impregnated with bacteria and carbon as the biomass support medium. The air sparging systems in each reactor is such as to maintain a gas linear velocity of approximately 3 mm/s (0.01 ft/sec). The liquid hourly retention time (LHRT) in the UBT system was approximately 19 h whereas the LHRT of both the V-ICB and H-ICB was 16 h.

The results of these experiments are set forth in the following Table 13.

## TABLE 13

### Comparison of a Commercial Immobilized Cell Biotreatment System With a Vertical and a Horizontal ICB Configuration

| Pollutant | Concentration ($\mu$g/L) | | |
|---|---|---|---|
| | Inlet Wastewater | UBT Effluent | V-ICB Effluent |
| A. Sample 1 | | | |
| Phenol | 1,100,000 | 2,000 | 20 |
| 2,4-Dimethyl Phenyl | 67,000 | 150 | 24 |
| Naphthalene | 17,000 | 159 | 270 |
| Acenaphthene | 1,900 | 281 | 430 |
| Fluorene | 950 | 73 | 166 |
| Acenaphthylene | 370 | 15 | 62 |
| Phenanthrene | 1,400 | 97 | 109 |
| Anthracene | 270 | 45 | 27 |
| Fluoranthene | 690 | 169 | 41 |
| Pyrene | 310 | 90 | 27 |

### TABLE 13 (cont'd)

| Pollutant | Concentration (g/L) |
|---|---|
| | H-ICB Effluent |
| A. Sample 1 | |
| Phenol | 16 |
| 2,4-Dimethyl Phenyl | 19 |
| Naphthalene | 140 |
| Acenaphthene | 56 |
| Fluorene | 15 |
| Acenaphthylene | 10 |
| Phenanthrene | 16 |
| Anthracene | BDL |
| Fluoranthene | BDL |
| Pyrene | BDL |

BDL- Below Detection Limit of 10 $\mu$g/L.

TABLE 13 (cont'd)

| Pollutant | Concentration ($\mu$g/L) | | |
|---|---|---|---|
| | Inlet Wastewater | UBT Effluent | V-ICB Effluent |
| **B. Sample 2** | | | |
| Phenol | 222,400 | 1,608 | 25 |
| 2,4-Dimethyl Phenyl | 1,544 | 45 | 1 |
| Naphthalene | 9,750 | 253 | 5 |
| Acenaphthene | 302 | 88 | BDL |
| Fluorene | 81 | 38 | BDL |
| Acenaphthylene | 183 | 25 | 2 |
| Phenanthrene | 109 | 26 | BDL |
| Anthracene | 46 | 15 | BDL |
| Fluoranthene | 29 | 23 | BDL |
| Pyrene | 31 | 12 | BDL |

TABLE 13 (cont'd)

| Pollutant | Concentration ($\mu$g/L) |
|---|---|
| | H-ICB Effluent |
| **B. Sample 2** | |
| Phenol | 13 |
| 2,4-Dimethyl Phenyl | 1 |
| Naphthalene | 6 |
| Acenaphthene | 26 |
| Fluorene | 4 |
| Acenaphthylene | 8 |
| Phenanthrene | 2 |
| Anthracene | 3 |
| Fluoranthene | BDL |
| Pyrene | BDL |

BDL- Below Detection Limit of 1 $\mu$g/L.

COMPARATIVE EXAMPLE 3

A comparison of the results from three fixed bed biological treatment processes used to treat wastewater from a coal tar processing plant is shown in Table 14. The Upflow Biotower is a commercial fixed bed biological reactor system marketed by Sybron Inc. for treatment of industrial wastewaters. The Upflow Biotower consists of a reactor vessel with dimensions of 3.7 x 3.0 x 3.0 m (12' x 10' x 10') 34 m$^3$ (8,975 gallons) and is packed with plastic pall rings for a biomass support medium. The foam reactors consisted of vessels with dimensions of 51 x 38 x 25 cm (2' x 1.5' x 1') 0.1 m$^3$ (22 gallons). On foam reactor was packed with porous polyurethane foam biomass supports prepared as follows: Sodium bicarbonate (190 g) and 1 cm$^3$ of surfactant tween 80 were added to 9.5 L of HYPOL 2000, a polyurethane prepolymer manufacture by W.R. Grace Inc., and mixed throughly. This mixture is then mixed with 9.5 L of water containing 130 ml of glacial acetic acid to initate polymerization and foaming. The resultant foam was

EP 0 467 969 B1

allowed to cure for 20 minutes and was then mechanically cut into 12.5 mm (1/2") blocks. The other foam reactor was packed with foam that was identical to the first reactor except that 2.5 Kg of powdered activated carbon (Calgon type WPX) was added to the HYPOL 20000 prepolymer mix prior to the addition of the water. All three reactors were inoculated with a mixture of biodegradative microorganisms selected for their ability to degrade phenolic and polynuclear aromatic pollutants present in coal tar processing wastewaters. The microorganisms colonized and attached to the biomass supports by natural processes. All three reactors were operated in a liquid and gas upflow configuration with the biomass supports as a fixed bed. The air sparging system in each reactor was such as to maintain a gas linear velocity of at least 3 mm/s (0.01 ft/sec). The liquid hourly retention time of each reactor was maintained at approximately 20 hours. The results are set forth in the following Table 14.

## TABLE 14

### Comparison of biomass supports used in fixed bed reactors

| Component | Concentration ($\mu$g/L) | | | |
|---|---|---|---|---|
| | Inlet Wastewater | Upflow Biotower | Foam Only | Carbon Impregnated Foam |
| Phenol | 177400 | 24 | 14 | 20 |
| 2,4-Dimethyl | 3459 | 58 | 171 | 18 |
| Naphthalene | 18434 | 203 | 59 | 13 |
| Acenaphthene | 486 | 86 | 75 | 32 |
| Fluorene | 315 | 35 | 34 | 13 |
| Acenaphthylene | 183 | 20 | 10 | 5 |

### TABLE 14 (cont'd)

### Comparison of biomass supports used in fixed bed reactors

| Component | Concentration ($\mu$g/L) | | | |
|---|---|---|---|---|
| | Inlet Wastewater | Upflow Biotowar | Foam Only | Carbon Impregnated Foam |
| Phenanthrene | 165 | 23 | 11 | 4 |
| Anthracene | 66 | 16 | 11 | 4 |
| Fluoranthene | 59 | 30 | 21 | 5 |
| Pyrene | 42 | 21 | 19 | 4 |

27

The data in Table 14 demonstrate that the concentration of phenolic and polynuclear aromatic pollutants in the effluent from the foam reactors was generally lower than that from the commercial Upflow Biotower. The level of pollutants present in the effluent from the carbon impregnated foam reactor was, however, considerably lower than that in effluent from the reactor containing foam without carbon impregnation. This illustrates the beneficial effect of impregnating foam with a particulate absorbent such as activated carbon.

COMPARATIVE EXAMPLE 4

A comparison of the performance of stirred and various fixed bed reactors is shown in Table 15. The continuously stirred tank reactor consisted of a vessel of 400 cm$^3$ volume. Agitation was provided by a stir bar and a magnetic stirrer. The reactor was purged with air through a sintered glass sparger at a rate of 200 cm$^3$ per minute. Phenol containing medium was pumped to the reactor using a peristaltic pump. The reactor was inoculated with 400 cm$^3$ of phenol degrading microbes. The fixed bed reactor consisted of alginate entrapped cells packed into a glass column with dimensions of 12 cm height x 2.5 cm diameter. The bottom of the column contained a glass sparger for aeration. Cells were immobilized in alginate by using the following method. A 4% (w/v) solution of sodium alginate was prepared by dissolving 4 grams of sodium alginate in 100 cm$^3$ of distilled water. This mixture was autoclaved at 120°C for 10 mins to totally dissolve the alginate. A 400 ml culture of phenol degrading microbes was centrifuged and the pellet resuspended in 50 cm$^3$ of distilled water. Equal volumes of the alginate and microbial suspensions were mixed together gently. This mixture was extruded dropwise into one liter of 0.2 M CaCl$_2$ solution. The beads were left to harden in the solution for one hour. Phenol containing medium was pumped to the reactor using a peristaltic pump. The foam ICBs consisted of glass columns of dimensions 64 cm height x 3.4 cm diameter. The bottom of the columns contained a sintered glass air sparger for aeration. One foam ICB was packed with polyurethane foam supports prepared as previously described in Comparative Example 3. These supports have the activated carbon internally impregnated in the polyurethane. The other foam ICB was packed with polyurethane foam prepared as follows: a conventional flexible polyether based polyurethane foam with a typical sponge structure and a density of 19.2 kg/m$^3$ (1.2 lbs/cft) was obtained from the General Foam Corporation, West Hazelton, PA. The foam was cut into 13 mm (1/2") blocks and coated with activated carbon by immersing the blocks into 500 cm$^3$ solution of 1% polystyrene in ethylacetate and containing 100 grams of powdered activated carbon (Calgon type WPX). The blocks were removed from the impregnated blocks were then dried in a vacuum hood for 12 hours. The blocks were then tumbled in a drum to remove activated carbon that was not absorbed to the surface of the foam blocks. Phenol containing medium was pumped to the ICB reactors using a peristallic pump. The results are set forth in the following Table 15.

TABLE 15

| Comparison of Reactor type and biomass support | | |
|---|---|---|
| Reactor Type | Inlet Phenol Concentration (mg/L) | Hydraulic Loading Rate (hr$^{-2}$) |
| Continuous Stirred Tank Reactor | 1000 | 0.05 |
| Fixed-Bed Alginate Beads | 1000 | 0.10 |
| Fixed-Bed Foam & Internal Carbon | 1500 | 0.10 |
| Fixed-Bed Foam & Surface Carbon | 1500 | 0.10 |
| Reactor Type | Outlet Phenol Concentration (mg/L) | Effluent Suspended Solids (OD 660 nm) |
| Continuous Stirred Tank Reactor | 350 | 0.28 |
| Fixed-Bed Alginate Beads | 0.10 | 0.21 |
| Fixed-Bed Foam & Internal Carbon | 0.005 | 0.11 |
| Fixed-Bed Foam & Surface Carbon | 0.002 | 0.07 |

The data in Table 15 demonstrate the considerable superiority of the fixed bed reactors over the stirred tank reactor with regards to effluent phenol levels and furthermore, the great superiority of the carbon impregnated foam fixed bed reactors over the alginate fixed bed with regards to both effluent phenol concentration and suspended solids.

COMPARATIVE EXAMPLE 5

A Comparison of Carbon Impregnated Foams in Fixed-Bed Reactors

A comparison of foams impregnated with activated carbon using a number of different techniques is demonstrated in Table 16. The supports were evaluated by packing glass columns with dimensions of 64 cm height x 3.4 cm diameter. The fixed bed in column I consisted of a flexible polyether based polyurethane foam with a typical sponge structure and a density of 19.2 kg/m$^3$ (1.2 lbs/ft$^3$) obtained from the General Foam Corporation, West Hazelton, PA. The size of the foam blocks was approximately 13 mm (1/2"). The column was inoculated with 200 cm$^3$ of a phenol degrading bacterial culture. The fixed bed in column II consisted of polyurethane foam prepared as described in Example 1. The fixed bed in column III consisted of polyurethane foam as in column I but which was impregnated with activated carbon as follows: The foam blocks were immersed in a solution of 500 cm$^3$ of 1% benzyl-Polyethylene amine (B-PEI) in ethyl alcohol containing 100 g of Calgon type WPX powdered activated carbon. The foam blocks were removed from the impregnating bath and the excess liquid removed by squeezing. The blocks were then dried in a vacuum hood for 12 hours. The blocks were then tumbled in a drum to remove the unattached carbon. The fixed bed in column IV consisted of polyurethane foam as in column I but which was impregnated with activated carbon as follows: the foam blocks were immersed in 500 cm$^3$ of a solution 1% polystyrene in ethyl acetate containing 100 g of Calgon type WPX powdered activated carbon. The foam blocks were then dried and prepared as previously described. The fixed bed in column V consisted of polyurethane foam as in column I but which was impregnated with activated carbon as follows: the foam blocks were immersed in 500 cm$^3$ of ethyl acetate containing 100 g of Calgon powdered activated carbon. The blocks were then dried and prepared as previously. The results are set forth in the following Table 16.

TABLE 16

| Comparison of carbon impregnated foams In Fixed-Bed reactors | | | | | |
|---|---|---|---|---|---|
| Effluent Parameter | Foam Support Type | | | | |
| | I | II | III | IV | V |
| Phenol ($\mu$g/L) | 3410 | 2 | 6 | 9 | 4 |
| 2,4-Dimethyl Phenol ($\mu$g/L) | 247 | 4 | 13 | 3 | 2 |
| Suspended Solids as OD 660 nm | 0.170 | 0.113 | 0.153 | 0.067 | 0.065 |
| Total Suspended Solids (mg/L) | 76 | 39 | 19 | 8 | 10 |

Table 16 clearly shows that the impregnation of polyurethane foam with activated carbon enhanced the removal of phenolic pollutants compared to the reactor containing foam only. Both internal and external impregnation of polyurethane foam elicits this enhanced performance with regards to effluent pollutant levels and suspended solids.

**Claims**

1. A method for the aerobic biodegradation of phenolic materials in aqueous streams to levels under 0.1 parts per million in period no more than 30 hours comprising flowing at a rate corresponding to an hydraulic residence time no more than 30 hours an aqueous stream containing phenolic materials in the presence of oxygen through a fixed mass of a porous biomass support system of particulate open-celled polyurethane foam having entrapped within its pores powdered activated carbon and aerobic phenolic-degrading microorganisms.

2. The method of claim 1 where the porous biomass support system contains at least 5 and up to 85 weight percent of powdered activated carbon on a dry basis at the time of preparation.

3. The method of claim 1 where the phenol is reduced to under 0.1 parts per million at an hydraulic residence time of under 24 hours.

4. A method for the aerobic biodegradation of organic pollutants in aqueous streams comprising flowing at a rate corresponding to an hydraulic residence time no more than 30 hours a pollutant-laden aqueous stream in the presence of oxygen through a fixed mass of a porous biomass support system of particulate open-celled foam having entrapped within its pores powdered activated carbon and aerobic microorganisms capable of degrading said organic pollutants and with a total sludge production no more than 100 kg dry weight per metric ton chemical oxygen demand consumed.

5. The method of claim 4 where the pollutants selected from the group consisting of phenolic materials, aromatic hydrocarbons and polynuclear aromatic hydrocarbons.

6. A porous biomass support system comprising an open-celled foam having voids of at least 2 mm in size and having entrapped within its voids from 5 to 85 weight percent, based on dry support as prepared,
powdered activated carbon with a surface area of at least 500 $m^2$/g and a pore volume of at least 0.5 $cm^3$/g, and 2) viable, aerobic microorganims capable of degrading organic pollutants.

7. A process for purification of aqueous feed stream containing organic pollutants which comprises:
passing an aqueous feed stream containing one or more organic pollutants through a fixed bed reactor having plug flow characteristics or substantially plug flow characteristics in the presence of a gaseous composition comprising an effective amount of oxygen, said reactor containing a plurality of biologically active particles comprising an open cell substrate having one or more particulate absorbents for at least one or said pollutants in or on and in said substrate and a biologically active effective amount of one or more aerobic microorganism capable of metabolizing at least one of said organic pollutants on, in or on or in said substrate, said absorbents or said substrate and said absorbents to provide an effluent stream in which the concentration of at least one of said pollutants is less than the concentration of said pollutant in said feed stream.

8. The method of claim 7 wherein said gaseous composition is distributed uniformly or substantially uniformly through all or a portion of said biologically active biomass.

9. The method of claim 2 wherein said reactor is a horizontal reactor in which the ratio of the length of the path traversed by the feed stream as it traverses the reactor to the width of the feed stream is at least 2:1.

10. A method for the aerobic biodegradation of phenolic materials in aqueous streams to levels under about 0.1 parts per million in a period of no more than 30 hours comprising flowing at a rate corresponding to a hydraulic residence time no more than 30 hours an aqueous stream containing phenolic materials in the presence of oxygen through a fixed biomass support system of particulate open-celled foam having entrapped within its pores powdered activated carbon and aerobic microorganisms capable of degrading said phenolic materials and with a total sludge production no more than 100 kg dry weight per metric ton chemical oxygen demand.

11. The method of claim 1 wherein the phenolic materials are selected from the groups consisting of phenols, cresols, catechols, resorcinols, nitrophenols, halogenated phenols, and 2,4-dimethylphenols.

12. The process of claim 7 wherein the substrate is an open-celled foam.

13. The process of claim 7 wherein the substrate is an is a open-celled polyurethane foam.

**Patentansprüche**

1. Verfahren für den aeroben Bioabbau von Phenolmaterialien in wäßrigen Strömen auf Größen unterhalb von 0,1 Teilen pro Million in einer 30 Stunden nicht übersteigenden Zeit, welches das Strömenlassen eines wäßrigen, Phenolmaterialien enthaltenden Stromes mit einer Geschwindigkeit, welche einer nicht längeren hydraulischen Verweilzeit als 30 Stunden entspricht, in Gegenwart von Sauerstoff durch eine feste Masse eines porösen Trägersystems für eine Biomasse, welches aus teilchenförmigem, offenzelligen Polyurethanschaum mit in seinen Poren eingeschlossener pulverförmiger Aktivkohle und aeroben, Phenol abbauenden Mikroorganismen besteht.

**2.** Verfahren nach Anspruch 1, bei dem das poröse Trägersystem für eine Biomasse zumindest 5 und bis zu 85 Gewichtsprozent an pulverförmiger Aktivkohle auf Trockenbasis zur Zeit der Herstellung enthält.

**3.** Verfahren nach Anspruch 1, bei dem das Phenol bei einer hydraulischen Verweilzeit von weniger als 24 Stunden auf weniger als 0,1 Teile pro Million reduziert wird.

**4.** Verfahren für den aeroben Bioabbau von organischen Verunreinigungen in wäßrigen Strömen, welches das Strömenlassen eines wäßrigen, mit organischen Verunreinigungen beladenen Stromes mit einer Geschwindigkeit, welche einer nicht längeren hydraulischen Verweilzeit als 30 Stunden entspricht, in Gegenwart von Sauerstoff durch eine feste Masse eines porösen Trägersystems für eine Biomasse, welches aus teilchenförmigem, offenzelligen Polyurethanschaum mit in seinen Poren eingeschlossener pulverförmiger Aktivkohle und aeroben, zum Abbau dieser organischen Verunreinigungen befähigten Mikroorganismen besteht, mit einer nicht größeren gesamten Schlammproduktion als 100 kg Trockengewicht pro metrischer Tonne an verbrauchtem chemischen Sauerstoffbedarf.

**5.** Verfahren nach Anspruch 4, bei dem die Verunreinigungen aus der aus Phenolmaterialien, aromatischen Kohlenwasserstoffen und vielkernigen aromatischen Kohlenwasserstoffen bestehenden Gruppe ausgewählt sind.

**6.** Poröses Trägersystems für eine Biomasse, welches einen offenzelligen Schaum mit Poren einer Größe von zumindest 2 mm aufweist, in welchen Poren 5 bis 85 Gewichtsprozent auf Basis des trockenen Trägers zur Zeit der Herstellung folgendes enthalten ist:
pulverförmige Aktivkohle mit einer Oberfläche von wenigstens 500 $m^2$/g und einem Porenvolumen von zumindest 0,5 $cm^3$/g und 2) lebensfähige aerobe, zum Abbau organischer Verunreinigungen befähigte Mikroorganismen.

**7.** Verfahren zur Reinigung eines wäßrigen, organische Verunreinigungen enthaltenden Zufuhrstromes, welches folgendes umfaßt:
Hindurchführen eines wäßrigen, eine oder mehrere organische Verunreinigungen enthaltenden Zufuhrstromes durch einen Festbettreaktor mit Kolbenströmungscharakteristik oder im wesentlichen Kolbenströmungscharakteristik in Gegenwart einer gasförmigen, eine wirksame Menge an Sauerstoff aufweisenden Zusammensetzung, wobei der Reaktor eine Vielzahl biologisch aktiver Partikel mit einem offenzelligen Substrat enthält, welches in oder an dem Substrat ein oder mehrere teilchenförmige Absorbentien für wenigstens eine der Verunreinigungen und eine biologisch wirksame Menge an einem oder mehreren aeroben, zur metabolischen Umwandlung wenigstens einer der organischen Verunreinigungen an, in oder an oder in dem Substrat befähigte Mikroorganismen aufweist, wobei die Absorbentien bzw. das Substrat und die Absorbentien einen Abwasserstrom schaffen, in dem die Konzentration wenigstens einer der Verunreinigungen geringer ist als die Konzentration der Verunreinigung im Zufuhrstrom.

**8.** Verfahren nach Anspruch 7, bei dem die gasförmige Zusammensetzung gleichmäßig oder im wesentlichen gleichmäßig durch die gesamte oder durch einen Teil der biologisch aktiven Biomasse hindurch verteilt ist.

**9.** Verfahren nach Anspruch 2, bei dem der Reqaktor ein horizontaler Reaktor ist, bei dem das Verhältnis der vom Zufuhrstrom bei seinem Durchlaufe durch den Reaktor durchquerten Weglänge zur Breite des Zufuhrstromes zumindest 2:1 beträgt.

**10.** Verfahren für den aeroben Bioabbau von Phenolmaterialien in wäßrigen Strömen auf Größen unterhalb von 0,1 Teilen pro Million in einer 30 Stunden nicht übersteigenden Zeit, welches das Strömenlassen eines wäßrigen, Phenolmaterialien enthaltenden Stromes mit einer Geschwindigkeit, welche einer nicht längeren hydraulischen Verweilzeit als 30 Stunden entspricht, in Gegenwart von Sauerstoff durch ein festes Trägersystem für eine Biomasse, welches aus teilchenförmigem, offenzelligen Schaum mit in seinen Poren eingeschlossener pulverförmiger Aktivkohle und aeroben, zum Abbau der Phenolmaterialien befähigten Mikroorganismen besteht, und mit einer nicht größeren gesamten Schlammproduktion als
100 kg Trockengewicht pro metrischer Tonne an chemischem Sauerstoffbedarf.

**11.** Verfahren nach Anspruch 1, bei dem die Phenolmaterialien aus den aus Phenolen, Kresolen, Katecholen, Resorzinolen, Nitrophenolen, halogenierten Phenolen und 2,4-Dimethylphenolen bestehenden Gruppen ausgewählt sind.

**12.** Verfahren nach Anspruch 7, bei dem das Substrat ein offenzelliger Schaum ist.

**13.** Verfahren nach Anspruch 7, bei dem das Substrat ein offenzelliger Polyurethanschaum ist.

**Revendications**

**1.** Procédé de biodégradation aérobie de matières phénoliques dans des courants aqueux, jusqu'à des proportions inférieures à 0,1 partie par million en une durée ne dépassant pas 30 heures, comprenant la circulation, à un débit correspondant à une durée de séjour hydraulique ne dépassant pas 30 heures, d'un courant aqueux contenant les matières phénoliques, en présence d'oxygène, à travers une masse fixe d'un système de support de biomasse poreux de particules de mousse de polyuréthane à alvéoles ouverts dans les pores duquel sont emprisonnés du charbon actif pulvérulent et des micro-organismes dégradant les matières phénoliques de façon aérobie.

**2.** Procédé selon la revendication 1, dans lequel le système de support de biomasse poreux contient au moins 5 et jusqu'à 85% en poids de charbon actif pulvérulent, sur une base sèche, au moment de la préparation.

**3.** Procédé selon la revendication 1, dans lequel le phénol est réduit à moins de 0,1 partie par million, en une durée de séjour hydraulique inférieure à 24 heures.

**4.** Procédé de biodégradation aérobie de polluants organiques dans des courants aqueux comprenant la circulation, à un débit correspondant à une durée de séjour hydraulique ne dépassant pas 30 heures, d'un courant aqueux chargé de polluants, en présence d'oxygène, à travers une masse fixe d'un système de support de biomasse poreux de particules de mousse à alvéoles ouverts dans les pores duquel sont emprisonnés du charbon actif pulvérulent et des micro-organismes aérobies capables de dégrader lesdits polluants organiques, et avec une production totale de boues ne dépassant pas 100 kg de poids sec par tonne de demande chimique en oxygène consommée.

**5.** Procédé selon la revendication 4, dans lequel les polluants sont choisis dans le groupe constitué par les matières phénoliques, les hydrocarbures aromatiques et les hydrocarbures aromatiques polynucléaires.

**6.** Système de support de biomasse poreux comprenant une mousse à alvéoles ouverts possédant des vides de taille au moins égale à 2 mm et, emprisonnés dans ses vides, de 5 à 85% en poids, par rapport au support sec tel que préparé,
1) d'un charbon actif pulvérulent ayant une surface spécifique d'au moins 500 $m^2$/g et un volume poreux d'au moins 0,5 $cm^3$/g, et
2) de micro-organismes aérobies viables capables de dégrader les polluants organiques.

**7.** Procédé de purification d'un courant de charge aqueux contenant des polluants organiques, qui comprend:
le passage d'un courant de charge aqueux contenant un ou plusieurs polluants organiques à travers un réacteur à lit fixe ayant des caractéristiques d'écoulement avec effet bouchon ou des caractéristiques d'écoulement avec effet sensiblement bouchon, en présence d'une composition gazeuse comprenant une quantité efficace d'oxygène, ledit réacteur contenant une pluralité de particules biologiquement actives comprenant un substrat à alvéoles ouverts possédant un ou plusieurs absorbants particulaires pour au moins un desdits polluants dans ou sur et dans ledit substrat et une quantité efficace biologiquement active d'un ou plusieurs micro-organismes aérobies capables de métaboliser l'un au moins desdits polluants organiques sur, dans ou sur et dans ledit substrat, lesdits absorbants ou ledit substrat et lesdits absorbants, pour donner un courant d'effluent dans lequel la concentration de l'un au moins desdits polluants est inférieure à la concentration dudit polluant dans ledit courant de charge.

**8.** Procédé selon la revendication 7, dans lequel ladite composition gazeuse est répartie uniformément ou sensiblement uniformément dans la totalité ou dans une partie de ladite biomasse biologiquement active.

**9.** Procédé selon la revendication 2, dans lequel ledit réacteur est un réacteur horizontal dans lequel le rapport entre la longueur du trajet traversé par ledit courant de charge lorsqu'il traverse le réacteur et la largeur du courant de charge est d'au moins 2 : 1.

**10.** Procédé de biodégradation aérobie de matières phénoliques dans des courants aqueux jusqu'à des proportions inférieures à environ 0,1 partie par million en une durée ne dépassant pas 30 heures, comprenant la circulation, à un débit correspondant à une durée de séjour hydraulique ne dépassant pas 30 heures, d'un courant aqueux contenant des matières phénoliques, en présence d'oxygène, à travers un système de support de biomasse fixe de particules de mousse à alvéoles ouverts, dans les pores duquel sont emprisonnés du charbon actif pulvérulent et des micro-organismes aérobies capables de dégrader lesdites matières phénoliques et avec une production totale de boues ne dépassant pas 100 kg de poids sec par tonne de demande chimique en oxygène.

**11.** Procédé selon la revendication 1, dans lequel les matières phénoliques sont choisies dans les groupes constitués par les phénols, les crésols, les catéchols, les résorcinols, les nitrophénols, les phénols halogénés et les 2,4-diméthylphénols.

**12.** Procédé selon la revendication 7, dans lequel le substrat est une mousse à alvéoles ouverts.

**13.** Procédé selon la revendication 7, dans lequel le substrat est une mousse de polyuréthane à alvéoles ouverts.

FIG. 1

FIG. 2

F I G. 3

F I G. 4

26 ➔ 30 14

12 28 **FIG. 5**

32

**FIG. 6** 26

32

34

12 36

**FIG. 7** 38 14

34

12 14

**FIG. 8** 32